(19) Europäisches Patentamt
European Patent Office
Office européen des brevets

(11) EP 0 917 556 B1

(12) **EUROPÄISCHE PATENTSCHRIFT**

(45) Veröffentlichungstag und Bekanntmachung des Hinweises auf die Patenterteilung:
**03.03.2004 Patentblatt 2004/10**

(21) Anmeldenummer: **97941892.8**

(22) Anmeldetag: **24.07.1997**

(51) Int Cl.⁷: **C09K 9/02**, G02F 1/15, G02F 1/155

(86) Internationale Anmeldenummer:
**PCT/EP1997/003998**

(87) Internationale Veröffentlichungsnummer:
**WO 1998/005736 (12.02.1998 Gazette 1998/06)**

# (54) ELEKTROCHROME ANZEIGEVORRICHTUNG

ELECTROCHROMIC INDICATING DEVICE

DISPOSITIF D'INDICATION ELECTROCHROME

(84) Benannte Vertragsstaaten:
**BE CH DE ES FR GB IE IT LI NL**

(30) Priorität: **06.08.1996 DE 19631728**

(43) Veröffentlichungstag der Anmeldung:
**26.05.1999 Patentblatt 1999/21**

(73) Patentinhaber: **Bayer Chemicals AG**
**51368 Leverkusen (DE)**

(72) Erfinder:
- **BERNETH, Horst**
  **D-51373 Leverkusen (DE)**
- **CLAUSSEN, Uwe**
  **D-51379 Leverkusen (DE)**
- **HAARER, Dietrich**
  **D-95448 Bayreuth (DE)**
- **SCHALLER, Jochen**
  **D-93049 Regensburg (DE)**

(56) Entgegenhaltungen:
**EP-A- 0 531 143**
**WO-A-97/30134**
**WO-A-97/30135**
**US-A- 4 902 108**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft eine elektrochrome Anzeigenvorrichtung.

Elektrochrome Anzeigevorrichtungen sind bereits bekannt, beispielsweise aus D. Theis in Ullmann's Encyclopedia of Industrial Chemistry, Vol. A 8, S. 622, Verlag Chemie 1987. Solche Anzeigevorrichtungen bestehen aus einem Paar Glasscheiben, die auf der einander zugewandten Seite mit einer transparenten leitfähigen Schicht versehen sind. In der Regel sind die elektrochromen Substanzen fest an diese leitfähige Schicht gebunden oder werden während des Betriebs auf diesen abgeschieden. Als elektrochrome Substanzen ist das Paar Wolframoxid/Palladiumhydrid das bekannteste. Weiterhin sind Viologene vorgeschlagen worden. Diese Anzeigevorrichtungen sind nicht selbstlöschend, d. h. das erzeugte Bild bleibt nach Abschalten des Stromes bestehen und kann nur durch Umpolen der Spannung wieder gelöscht werden. Solche Vorrichtungen sind nicht besonders beständig und erlauben keine hohe Zahl an Schaltcyclen. Zudem sind insbesondere solche mit Wolframoxid/Palladiumhydrid aufgebauten Zellen wegen der Lichtstreuung an diesen elektrochromen Schichten nicht im durchfallenden Licht zu betreiben, sondern lediglich reflektiv.

In WO-94/23333 werden elektrochrome Zellen verschiedener Bauweise gegenübergestellt, die aber nicht als Anzeigevorrichtungen verwendet werden:

a) solche, bei denen die elektrochromen Substanzen als Film oder Schicht fest auf den Elektroden liegen (vgl. Ullmann, s.o.),

b) solche, bei denen die elektrochromen Substanzen beim Redoxprozeß auf den Elektroden als Schicht abgeschieden werden (vgl. Ullmann, s.o.),

c) solche, bei denen die elektrochromen Substanzen permanent in Lösung bleiben.

Bei diesem letzten Typ werden unter anderem zwei gravierende Nachteile hervorgehoben:

1) die Diffusion der elektrochromen Substanzen in der Lösung,
2) der hohe Stromverbrauch zur Aufrechterhaltung der Farbe, da diese wegen Diffusion durch Rekombination und Reaktion an der gegenüberliegenden Elektrode permanent abgebaut wird.

Aus US-4.902.108 ist ein elektrochromes System dieses letztgenannten Typs c) bekannt. In einer elektrochromen Zelle, die ebenfalls aus leitfähig beschichteten Glasplatten besteht, ist eine Lösung eines Paares elektrochromer Substanzen in einem inerten Lösungsmittel enthalten.

Als Paar von Redoxsubstanzen wird je eine reduzierbare und eine oxidierbare Substanz verwendet. Beide sind farblos oder nur schwach gefärbt. Unter Einfluß einer elektrischen Spannung wird die eine Substanz reduziert, die andere oxidiert, wobei wenigstens eine farbig wird. Nach Abschalten der Spannung bilden sich die beiden ursprünglichen Redoxsubstanzen wieder zurück, wobei Entfärbung bzw. Farbaufhellung auftritt.

$$\text{RED1} + \text{OX2} \rightleftharpoons \text{OX1} + \text{RED2}$$

(farblos) (Niederenergiepaar) — (farbig) (Hochenergiepaar)

Aus US-4.902.108 ist bekannt, daß solche Paare von Redoxsubstanzen geeignet sind, bei denen die reduzierbare Substanz wenigstens zwei chemisch reversible Reduktionswellen im Cyclischen Voltammogramm und die oxidierbare Substanz entsprechend wenigstens zwei chemisch reversible Oxidationswellen besitzt.

Für solche elektrochromen Zellen wurden verschiedene Anwendungen beschrieben. So können sie z. B. als Automobilrückspiegel ausgebildet sein, der bei Nachtfahrt durch Anlegen einer Spannung abgedunkelt werden kann und somit das Blenden durch Scheinwerfer nachfolgender Fahrzeuge verhindert (vgl. z. B. US-3.280.701, US-4.902.108, EP-A-0.435.689). Weiterhin können solche Zellen auch in Fensterscheiben oder Autosonnendächern eingesetzt werden, wo sie nach Anlegen einer Spannung das Sonnenlicht abdunkeln.

Solche elektrochromen Zellen bestehen normalerweise aus einem Paar Glasplatten, von denen im Falle des Autospiegels eine verspiegelt ist. Eine Seite dieser Scheiben ist mit einer lichtdurchlässigen, elektrisch leitfähigen Schicht, z. B. Indium-Zinn-Oxid (ITO), flächig beschichtet. Aus diesen Scheiben wird nun eine Zelle aufgebaut, indem sie mit ihrer einander zugewandten, elektrisch leitfähig beschichteten Seite über einen Dichtungsring zu einer Zelle verbunden werden. In diese Zelle wird nun über eine Öffnung eine elektrochrome Flüssigkeit eingefüllt und die Zelle

dicht verschlossen. Über die ITO-Schichten werden die beiden Scheiben mit einer Spannungsquelle verbunden.

Elektrochrome Zellen der eben geschilderten Bauweise wurden ausschließlich zum Aufbau ganzflächig einfärbbarer Bauteile wie die eben genannten Autospiegel, Fensterscheiben oder Autosonnendächer beschrieben. Von solchen ganzflächig einfärbbaren Bauteilen wurden auch elektrochrome Anzeigen einer sehr einfachen Bauart abgeleitet, bei denen eine flächige elektrochrome Zelle entweder mit einer lichtundurchlässigen Platte abgedeckt wurde, aus der die darzustellenden Zeichen ausgeschnitten waren, oder aber bei denen auf die flächige elektrochrome Zelle die Zeichen aus lichtundurchlässigem Material aufgebracht wurden. In beiden Fällen wurden die Zeichen sichtbar, wenn die Zelle stromlos und somit hell war, und unsichtbar, wenn die Zelle stromführend, also dunkel war. Auf diese Weise werden Randschärfeprobleme durch Diffussion sicher unterbunden bzw. kommen nicht zum Tragen. Die Randschärfe wird durch die Masken gegeben.

Aus dem Bekannten, insbesondere aufgrund der in WO-94/23333 genannten Nachteile, war zu befürchten, daß elektrochrome Anzeigevorrichtungen, bei denen Informationen variabel z. B. über einzeln angesteuerte Segmente, Balken oder Punkte dargestellt werden können, auf Basis der eben beschriebenen Bauweise des US-4.902.108 nicht möglich sind. Insbesondere war zu erwarten, daß die Randschärfe der anzuzeigenden Segmente unbefriedigend schlecht ist, da die elektrochromen Substanzen in der elektrochromen Flüssigkeit frei beweglich sind und deshalb vor allem bei längerer Betriebsdauer durch Diffusion auch die Bereiche der Anzeigevorrichtung einfärben, die gar nicht elektrisch eingeschaltet sind.

Gegenstand der Erfindung ist nun eine elektrochrome Anzeigevorrichtung, bestehend aus mindestens zwei lichtdurchlässigen Trägern, vorzugsweise Glas- oder Kunststoffplatten, die über einen Abstandsring miteinander verbunden sind, und von denen mindestens eine auf der einander zugewandten Seite lichtdurchlässig elektrisch leitfähig beschichtet ist und gegebenenfalls einer der Träger verspiegelt ist, dadurch gekennzeichnet, daß wenigstens ein leitfähig beschichteter Träger in voneinander elektrisch getrennte Segmente aufgeteilt ist, die einzeln kontaktierbar sind, und zwischen den Trägern enthalten ist:

a) ein Lösungsmittel,

b) in diesem Lösungsmittel gelöst mindestens eine oxidierbare Substanz $RED_1$, die durch Elektronenabgabe an einer Anode, und mindestens eine reduzierbare Substanz $OX_2$, die durch Elektronenaufnahme an einer Kathode, jeweils unter Änderung der Extinktion im sichtbaren Bereich des Spektrums in ihre jeweiligen Formen $OX_1$ bzw. $RED_2$ übergehen, wobei nach Ladungsausgleich jeweils die ursprünglichen Formen $RED_1$ und $OX_2$ zurückgebildet werden,

c) gegebenenfalls ein Leitsalz.

Unter der Änderung der Extinktion im sichtbaren Bereich des Spektrums kann verstanden werden

a) $OX_2$ und/oder $RED_1$ sind farblos oder nur schwach gefärbt, während die an Kathode bzw. Anode gebildeten Formen $RED_2$ und/oder $OX_1$ gefärbt, vorzugsweise stark gefärbt sind,

b) wenigstens eine der beiden elektrochromen Substanzen $OX_2$ oder $RED_1$ ist gefärbt, während ihre an Kathode bzw. Anode gebildeten Formen $RED_2$ bzw. $OX_1$ nicht oder nur schwach oder andersfarbig gefärbt sind.

Diese speziellen Ausführungsformen unter a) und b) sind ebenfalls Gegenstand der Erfindung.

Insbesondere handelt es sich um einzellige Anzeigevorrichtungen, bei denen Kathoden- und Anodenraum nicht voneinander getrennt sind, durch beispielsweise Ionen-durchlässige Membranen oder dergleichen.

Die Aufteilung der leitfähig beschichteten Platten in voneinander elektrisch getrennte Segmente kann in verschiedener Form erfolgen:

a) durch direkte Ansteuerung, wobei:

aa) nur eine der beiden Platten ist in Segmente aufgeteilt, während die andere Platte keine Strukturierung besitzt, das heißt ihre ganze Fläche ist leitfähig beschichtet,

ab) beide Platten sind in Segmente aufgeteilt, oder

ac) nur eine der beiden Platten ist leitfähig beschichtet und in Segmente aufgeteilt, während die andere keine leitfähige Beschichtung trägt,

oder

b) multiplexe Ansteuerung, bei der die Segmente in Gruppen zusammengefaßt sind, wobei jede eine andere Rükkelektrode hat.

Bei der Ausführung nach aa) wird der eine Pol der Spannungsquelle an der unstrukturierten Platte angeschlossen, während der andere je nach darzustellendem Bild an eines oder mehrere der Segmente angeschlossen wird.

Bei der Ausführung nach ab) kann die Aufteilung der beiden Platten in Segmente gleichartig erfolgen, d. h. gleichgeformte Segmente liegen auf beiden Platten paarweise deckungsgleich übereinander. Kontaktierung und Stromfluß erfolgen dann über solche Segmentpaare. Die Aufteilung kann aber auch so erfolgen, daß einer Gruppe benachbarter Segmente auf einer der beiden Platten eine einheitliche Fläche auf der anderen Platte gegenüberliegt, die in ihrer Form beispielseise der Gesamtform der Segmentgruppe entspricht. Die Ansteuerung erfolgt dann beispielsweise so, daß der eine Pol der Spannungsquelle an eine oder mehrere dieser großen Segmente der zweiten Platte angeschlossen wird, während der zweite Pol einzelne Segmente aus den Segmentgruppen der ersten Platte ansteuert.

Bei der Ausführungsform nach ac) erfolgt die Ansteuerung beispielsweise so, daß die beiden Pole der Spannungsquelle an jeweils benachbarte Segmente angeschlossen werden. Da dann nebeneinanderliegende Segmente entgegengesetzte elektrische Polung aufweisen, erhält man beispielsweise an beiden Segmenten unterschiedliche Farbentwicklung entsprechend den unterschiedlichen Kathodenund Anoden-Reaktionen.

Die Gestaltung der Segmente ist beliebig. Es lassen sich damit beispielsweise irgendwelche Formen bilden, die Bilder, Logos, Buchstaben oder Ziffern darstellen. Solche Formen können nebeneinander zu einer Gesamtstruktur, einem Bild, einem Schriftzug, einer Zahl zusammengestellt werden, wobei die einzelnen Teile unabhängig voneinander kontaktiert sind. Insbesondere sind aber solche Aufteilungen der Segmente gemeint, die zu einer Matrix-artigen Darstellung mit multiplexer Ansteuerung geeignet sind. So können Balken, Quadrate oder Punkte so angeordnet werden, daß durch gezielte Ansteuerung bestimmter solcher Segmente (Elemente) Buchstaben, Ziffern, Wörter, Zahlen, aber auch Bilder dargestellt werden können. Die Darstellung kann bevorzugt im positiv-Kontrast erfolgen, dunkel oder farbig auf hellem Grund, oder umgekehrt oder aber auch im negativ-Kontrast in zwei verschiedenen Farben, beispielsweise blau auf gelbem Grund oder umgekehrt. Es ist aber auch eine Ausführung möglich, bei der beispielsweise die Informationen im ausgeschalteten Zustand blau auf farblosem Untergrund und im eingeschalteten Zustand rot auf grünem Untergrund sind. Durch die Einstellung der Steilheit der Kennlinie lassen sich in einem gewissen Bereich Graustufen darstellen.

Farbgebung, Kontrast und Randschärfe werden von den oben unter a) und b) skizzierten Bauarten bestimmt, von der Polung des elektrischen Stroms und von der Dynamik der verwendeten Redoxpaare $RED_1$ und $OX_2$, beispielsweise deren Drift im elektrischen Feld, deren Diffusion und deren Rekombination unter Elektronentransfer. Beispielsweise Ladungszustand, Molekülgröße und -form und Kinetik des Elektronentransfers beeinflussen so die Dynamik. Diese dynamischen Prozesse verhindern eine Ablagerung der elektrochromen Substanzen an den Elektroden und die damit verbundene eingeschränkte Reversibilität und geringe Cyclenzahl, wie sie für alle bekannten elektrochromen Anzeigevorrichtungen typisch sind.

Durch Auswahl der elektrochromen Verbindungen $RED_1$ und $OX_2$ und/oder Mischungen davon lassen sich beliebige monochrome Farbtöne einstellen. Für eine polychrome Farbdarstellung können zwei oder mehrere solcher elektrochromer Anzeigevorrichtungen flächig aufeinander gelegt werden, wobei jede dieser Vorrichtungen einen anderen Farbton erzeugen kann. Vorzugsweise wird ein solcher Stapel so aufgebaut, daß die sich berührenden Anzeigevorrichtungen eine lichtdurchlässige Platte gemeinsam haben, die dann bei den oben genannten Bauformen aa) und ab) auch auf beiden Seiten leitfähig beschichtet ist und je nach Ausführung in Segmente unterteilt ist. Beispielsweise besteht dann ein Stapel aus drei elektrochromen Anzeigevorrichtungen aus mindestens drei Platten. Durch Einschalten von Segmenten in verschiedenen dieser gestapelten Vorrichtungen lassen sich mehrfarbige Anzeigen realisieren. Werden hintereinander liegende Segmente verschiedener solcher Vorrichtungen eingeschaltet, erhält man Mischfarben. So lassen sich im Rahmen einer Trichromie beliebige Farben darstellen, also beispielsweise bunte Bilder.

Im Sinne der Erfindung geeignete reduzierbare Substanzen $OX_2$ sind solche,

a) die in dem in der Vorrichtung verwendeten Lösungsmittel ein Cyclisches Voltammogramm zeigen, das mindestens eine, vorzugsweise mindestens zwei chemisch reversible Reduktionsstufen besitzen,

b) die eine cyclische organische Verbindung darstellen, die nach Aufnahme von 1 oder 2 Elektronen unter Bruch einer der σ-Bindungen des Ringes in eine ringoffene Verbindung übergeht und die durch Abgabe von 1 oder 2 Elektronen wieder in die cyclische Ausgangsverbindung übergeht.

Solche unter b) genannte Verbindungen zeigen in der Regel im Cyclischen Voltammogramm eine chemisch

irreversible Reduktionsstufe gefolgt von einer chemisch irreversiblen Oxidationsstufe. In der Regel werden bei Ringöffnung oder Ringschluß insgesamt zwei Elektronen übertragen. Die Verbindungen unter b) sollen aber nicht auf solche eingeschränkt werden, die das eben geschilderte Verhalten im Cyclischen Voltammogramm zeigen oder bei denen zwei Elektronen bei Ringöffnung oder Ringschluß übertragen werden.

Im Sinne der Erfindung geeignete oxidierbare Substanzen $RED_1$ sind solche, die in dem in der Anzeigenvorrichtung verwendeten Lösungsmittel ein Cyclisches Voltammogramm zeigen, das mindestens eine, vorzugsweise zwei chemisch reversible Oxidationsstufen besitzen,

Im Sinne der Erfindung geeignete $OX_2$ sind:

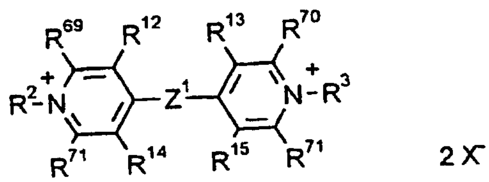

(II),

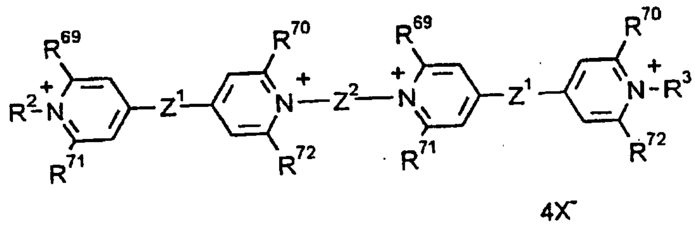

(III),

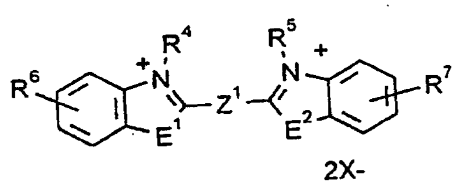

(IV),

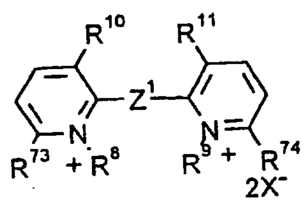

(V),

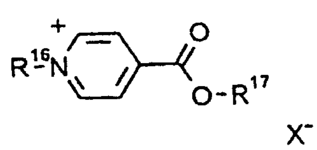

(VI),

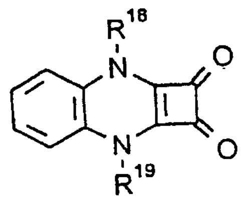
(VII),

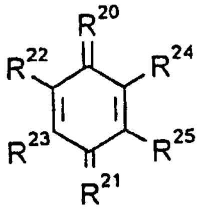
(VIII),

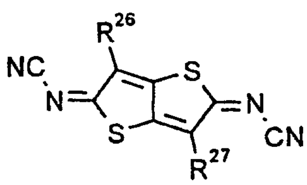
(IX),

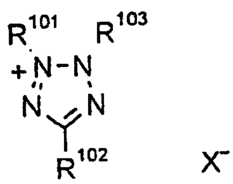
(CI)

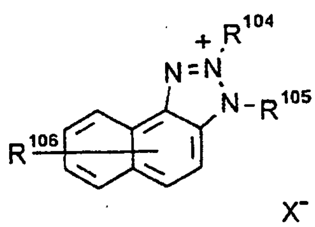
(CII),

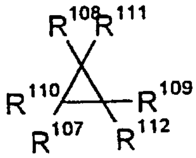
(CIII),

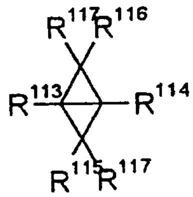

(CIV)

worin

| | |
|---|---|
| $R^2$ bis $R^5$, $R^8$, $R^9$, $R^{16}$ bis $R^{19}$ | unabhängig voneinander $C_1$- bis $C_{18}$-Alkyl, $C_2$- bis $C_{12}$-Alkenyl, $C_4$- bis $C_7$-Cycloalkyl, $C_7$- bis $C_{15}$-Aralkyl oder $C_6$- bis $C_{10}$-Aryl bedeuten oder |
| $R^4$; $R^5$ bzw. $R^8$; $R^9$ | gemeinsam eine $-(CH_2)_2$- oder $-(CH_2)_3$-Brücke bilden können, |
| $R^6$, $R^7$ und $R^{22}$ bis $R^{25}$ | unabhängig voneinander Wasserstoff, $C_1$- bis $C_4$-Alkyl, $C_1$- bis $C_4$-Alkoxy, Halogen, Cyan, Nitro oder $C_1$- bis $C_4$-Alkoxycarbonyl bedeuten oder |
| $R^{22}$; $R^{23}$ und/oder $R^{24}$; $R^{25}$ | eine -CH=CH-CH=CH-Brücke bilden können, |
| $R^{10}$; $R^{11}$, $R^{12}$; $R^{13}$ und $R^{14}$; $R^{15}$ | unabhängig voneinander Wasserstoff oder paarweise eine $-(CH_2)_2$-, $-(CH_2)_3$- oder -CH=CH-Brücke bedeuten, |
| $R^{20}$ und $R^{21}$ | unabhängig voneinander O, N-CN, $C(CN)_2$ oder N-$C_6$- bis $C_{10}$-Aryl bedeuten, |
| $R^{26}$ und $R^{27}$ | Wasserstoff, $C_1$- bis $C_4$-Alkyl, $C_1$- bis $C_4$-Alkoxy, Halogen, Cyan, Nitro, $C_1$- bis $C_4$-Alkoxycarbonyl oder $C_6$- bis $C_{10}$-Aryl bedeuten, |
| $R^{69}$ bis $R^{74}$ | unabhängig voneinander Wasserstoff oder $C_1$- bis $C_6$-Alkyl bedeuten oder |
| $R^{69}$; $R^{12}$ und/oder $R^{70}$; $R^{13}$ | gemeinsam eine -CH=CH-CH=CH-Brücke bilden, |
| $E^1$ und $E^2$ | unabhängig voneinander O, S, $NR^1$ oder $C(CH_3)_2$ bedeuten oder |
| $E^1$ und $E^2$ | gemeinsam eine $-N-(CH_2)_2-N$-Brücke bilden, |
| $R^1$ | $C_1$- bis $C_{18}$-Alkyl, $C_2$- bis $C_{12}$-Alkenyl, $C_4$- bis $C_7$-Cycloalkyl, $C_7$- bis $C_{15}$-Aralkyl, $C_6$- bis $C_{10}$-Aryl bedeutet, |
| $Z^1$ | eine direkte Bindung, -CH=CH-, $-C(CH_3)=CH-$, -C(CN)=CH-, -CCl=CCl-, -C(OH)=CH-, -CCl=CH-, -C≡C-, -CH=N-N=CH-, $-C(CH_3)=N-N=C(CH_3)-$ oder -CCl=N-N=CCl- bedeutet, |
| $Z^2$ | $-(CH_2)_r-$ oder $-CH_2-C_6H_4-CH_2-$ bedeutet, |
| r | eine ganze Zahl von 1 bis 10 bedeutet, |
| $R^{101}$ bis $R^{105}$ | unabhängig voneinander $C_6$- bis $C_{10}$-Aryl oder einen ggf. benzanellierten aromatischen oder quasiaromatischen fünf- oder sechsgliedrigen heterocyclischen Ring bedeuten, |
| $R^{107}$, $R^{109}$, $R^{113}$ und $R^{114}$ | unabhängig voneinander einen Rest der Formeln (CV) bis (CVII) |

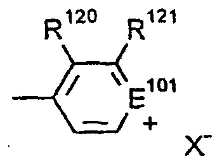

(CV),

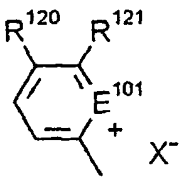

(CVI),

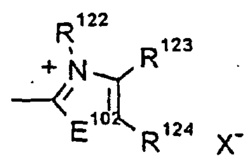

(CVII)

bedeuten,

| | |
|---|---|
| $R^{108}$, $R^{115}$ und $R^{116}$ | unabhängig voneinander $C_6$- bis $C_{10}$-Aryl oder einen Rest der Formel (CV) bedeuten, |
| $R^{110}$ bis $R^{112}$, $R^{117}$ und $R^{118}$ | unabhängig voneinander Wasserstoff, $C_1$- bis $C_4$-Alkyl, Halogen oder Cyano bedeuten, |
| $E^{101}$ und $E^{102}$ | unabhängig voneinander O, S oder N-$R^{119}$ bedeuten, |
| $R^{119}$ und $R^{122}$ | unabhängig voneinander $C_1$- bis $C_{18}$-Alkyl, $C_2$- bis $C_8$-Alkenyl, $C_4$- bis $C_7$-Cycloalkyl, $C_7$- bis $C_{15}$-Aralkyl oder $C_6$- bis $C_{10}$-Aryl bedeuten, |
| $R^{106}$, $R^{120}$, $R^{121}$, $R^{123}$ und $R^{124}$ | unabhängig voneinander Wasserstoff, $C_1$-bis $C_4$-Alkyl, $C_1$- bis $C_4$-Alkoxy, Halogen, Cyano, Nitro oder $C_1$-bis $C_4$-Alkoxycarbonyl bedeuten oder |
| $R^{120}$, $R^{121}$ bzw. $R^{123}$, $R^{124}$ | gemeinsam eine -CH=CH-CH=CH-Brücke bilden und |
| $X^-$ | ein unter den Bedingungen redox-inertes Anion bedeutet. |

Im Sinne der Erfindung geeignete $OX_2$ sind auch Metallsalze oder Metallkomplexe, vorzugsweise von solchen Metallionen, deren Oxidationsstufen sich um 1 unterscheiden. Geeignete Metallionen $OX_2/RED_2$ sind beispielsweise $Fe^{3+}/Fe^{2+}$, $Ni^{3+}/Ni^{2+}$, $Co^{3+}/Co^{2+}$, $Cu^{2+}/Cu^+$.

Im Sinne der Erfindung geeignete $RED_1$ sind:

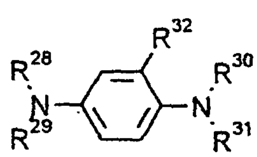

(X),

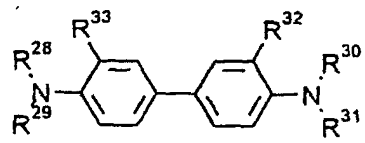

(XI),

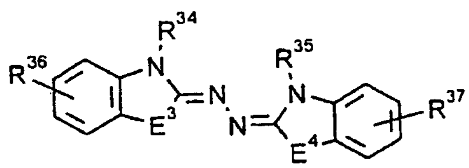

(XII),

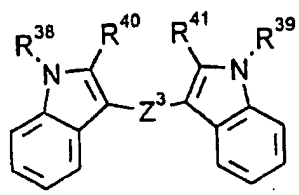

(XIII),

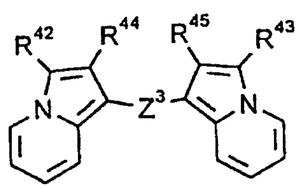

(XIV),

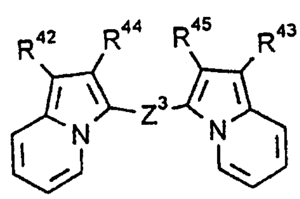

(XV),

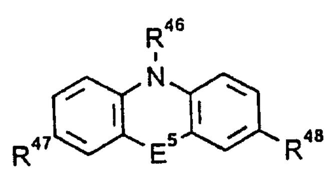

(XVI),

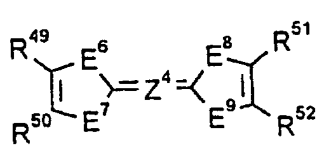

(XVII),

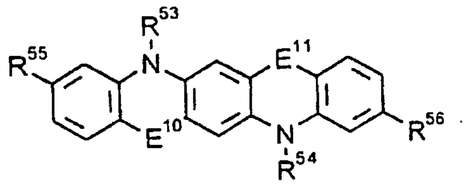

(XVIII),

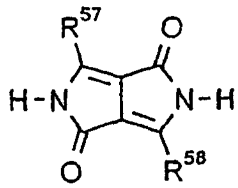

(XIX),

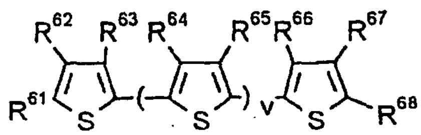

(XX),

worin

| | |
|---|---|
| $R^{28}$ bis $R^{31}$, $R^{34}$, $R^{35}$, $R^{38}$, $R^{39}$, $R^{46}$, $R^{53}$ und $R^{54}$ | unabhängig voneinander $C_1$- bis $C_{18}$-Alkyl, $C_2$- bis $C_{12}$-Alkenyl, $C_4$- bis $C_7$-Cycloalkyl, $C_7$- bis $C_{15}$-Aralkyl oder $C_6$- bis $C_{10}$-Aryl bedeuten, |
| $R^{32}$, $R^{33}$, $R^{36}$, $R^{37}$, $R^{40}$, $R^{41}$, $R^{42}$ bis $R^{45}$, $R^{47}$, $R^{48}$, $R^{49}$ bis $R^{52}$ und $R^{55}$ bis $R^{58}$ | unabhängig voneinander Wasserstoff, $C_1$- bis $C_4$-Alkyl, $C_1$- bis $C_4$-Alkoxy, Halogen, Cyan, Nitro, $C_1$- bis $C_4$-Alkoxycarbonyl, $C_6$- bis $C_{10}$-Aryl bedeuten und $R^{57}$ und $R^{58}$ zusätzlich einen aromatischen oder quasiaromatischen fünf- oder sechsgliedrigen heterocyclischen Ring, der gegebenenfalls benzanneliert ist, bedeuten und $R^{48}$ zusätzlich $NR^{75}R^{76}$ bedeutet oder |
| $R^{49}$; $R^{50}$ und/oder $R^{51}$; $R^{52}$ | eine $-(CH_2)_3-$, $-(CH_2)_4-$, $-(CH_2)_5-$ oder -CH=CH-CH=CH-Brücke bilden, |
| $Z^3$ | eine direkte Bindung, eine -CH=CH- oder -N=N-Brücke bedeutet, |
| $=Z^4=$ | eine direkte Doppelbindung, eine =CH-CH= oder =N-N=-Brücke bedeutet, |
| $E^3$ bis $E^5$, $E^{10}$ und $E^{11}$ | unabhängig voneinander O, S, |

$NR^{59}$ oder $C(CH_3)_2$ bedeuten und $E^5$ zusätzlich C=O oder $SO_2$ bedeutet

$E^3$ und $E^4$ unabhängig voneinander zusätzlich -CH=CH- bedeuten können,

$E^6$ bis $E^9$ unabhängig voneinander S, Se oder $NR^{59}$ bedeuten,

$R^{59}$, $R^{75}$ und $R^{76}$ unabhängig voneinander $C_1$- bis $C_{13}$-Alkyl, $C_2$- bis $C_8$-Alkenyl, $C_4$- bis $C_7$-Cycloalkyl, $C_7$- bis $C_{15}$-Aralkyl, $C_6$- bis $C_{10}$-Aryl bedeuten, und $R^{75}$ zusätzlich Wasserstoff bedeutet oder $R^{75}$ und $R^{76}$ in der Bedeutung von $NR^{75}R^{76}$ gemeinsam mit dem N-Atom, an das sie gebunden sind, einen fünf- oder sechsgliedrigen Ring bedeuten, der gegebenenfalls weitere Heteroatome enthält,

$R^{61}$ bis $R^{68}$ unabhängig voneinander Wasserstoff, $C_1$- bis $C_6$-Alkyl, $C_1$- bis $C_4$-Alkoxy, Cyan, $C_1$- bis $C_4$-Alkoxycarbonyl oder $C_6$- bis $C_{10}$-Aryl bedeuten und

$R^{61}$; $R^{62}$ und $R^{67}$; $R^{68}$ unabhängig voneinander zusätzlich eine $-(CH_2)_3-$, $-(CH_2)_4-$ oder -CH=CH-CH=CH-Brücke bilden, und

v eine ganze Zahl zwischen 0 und 10 bedeutet.

Im Sinne der Erfindung geeignete $RED_1$ sind auch Metallsalze oder Metallkomplexe, vorzugsweise von solchen Metallionen, deren Oxidationsstufen sich um 1 unterscheiden. Geeignete Metallionen $RED_1/OX_1$ sind beispielsweise $Fe^{2+}/Fe^{3+}$, $Ni^{2+}/Ni^{3+}$, $CO^{2+}/Co^{3+}$, $Cu^{+}/Cu^{2+}$.

Ebenfalls im Sinne der Erfindung geeignet sind solche Redoxpaare, die über eine kovalente Brücke miteinander verknüpft sind entsprechend der Formel

$$Y-[-(-B-Z-)_a-(-B-Y-)_b-]_c-B-Z \qquad (I),$$

worin

Y und Z unabhängig voneinander für einen Rest $OX_2$ oder $RED_1$ stehen, wobei aber mindestens ein Y für $OX_2$ und mindestens ein Z für $RED_1$ steht, wobei

$OX_2$ für den Rest eines reversibel elektrochemisch reduzierbaren Redoxsystems steht, und
$RED_1$ für den Rest eines reversibel elektrochemisch oxidierbaren Redoxsystems steht,

B für ein Brückenglied steht,

c für eine ganze Zahl von 0 bis 5 steht, und

a und b unabhängig voneinander für eine ganze Zahl von 0 bis 5 stehen.

Hierbei ist unter reversibel elektrochemisch reduzierbar oder oxidierbar gemeint, daß die Elektronenübertragung ohne oder auch mit Änderung des σ-Gerüsts erfolgen kann ganz im Sinne der oben genannten Definition der erfindungsgemäßen $OX_2$ und $RED_1$.

Insbesondere sind mit den elektrochromen Verbindungen der Formel (I) solche der Formeln

$$OX_2\text{-B-}RED_1 \quad \text{(Ia),}$$

$$OX_2\text{-B-}RED_1\text{-B-}OX_2 \quad \text{(Ib),}$$

$$RED_1\text{-B-}OX_2\text{-B-}RED_1 \quad \text{(Ic),}$$

oder

$$OX_2\text{-(B-}RED_1\text{-B-}OX_2)_d\text{-B-}RED_1 \quad \text{(Id)}$$

gemeint,
worin

$OX_2$, $RED_1$ und B die oben angegebene Bedeutung haben und
d für eine ganze Zahl von 1 bis 5 steht.

Mit $OX_2$ und $RED_1$ in den Formeln (I) und (Ia) bis (Id) sind insbesondere Reste der oben beschriebenen Redoxsysteme der Formeln (II) bis (IX), (CI) bis CIV) und (X) bis (XX) gemeint, wobei die Bindung zum Brückenglied B über einen der Reste $R^2$ bis $R^{19}$, $R^{22}$ bis $R^{27}$, $R^{28}$ bis $R^{58}$, $R^{61}$, $R^{62}$, $R^{67}$, $R^{68}$, $R^{122}$ oder im Falle, daß einer der Reste $E^1$ oder $E^2$ für $NR^1$ oder einer der Reste $E^3$ bis $E^{11}$ für $NR^{59}$ oder einer der Reste $E^{101}$ bis $E^{102}$ für $NR^{119}$ steht, über$R^1$, $R^{59}$ bzw. $R^{119}$ erfolgt und die genannten Reste dann für eine direkte Bindung stehen, und

B für eine Brücke der Formeln $-(CH_2)_n-$ oder $-[Y^1{}_s(CH_2)_m-Y^2]_o-(CH_2)_p-Y^3{}_q$-steht, die durch $C_1$- bis $C_4$-Alkyl, $C_1$- bis $C_4$-Alkoxy, Halogen oder Phenyl substituiert sein kann,

$Y^1$ bis $Y^3$ unabhängig voneinander für O, S, $NR^{60}$, COO, CONH, NHCONH, Cyclopentandiyl, Cyclohexandiyl, Phenylen oder Naphthylen stehen,

$R^{60}$ $C_1$- bis $C_6$-Alkyl, $C_2$- bis $C_6$-Alkenyl, $C_4$- bis $C_7$-Cycloalkyl, $C_7$- bis $C_{15}$-Aralkyl oder $C_6$- bis $C_{10}$-Aryl bedeutet,

n eine ganze Zahl von 1 bis 12 bedeutet,

m und p unabhängig voneinander eine ganze Zahl von 0 bis 8 bedeuten,

o eine ganze Zahl von 0 bis 6 bedeutet und

q und s unabhängig voneinander 0 oder 1 bedeuten.

Überraschenderweise wurde gefunden, daß mit einer der eben beschriebenen elektrochromen Anzeigevorrichtungen Informationen mit ausgezeichneter Randschärfe und hohem Bildkontrast dargestellt werden können. Beste Randschärfe erhält man insbesondere bei Verwendung der elektrochromen Substanzen der Formel (I).

Beispiele für Metallsalze oder Metallkomplexe, die als $OX_2$ oder $RED_1$ eingesetzt werden können, sind $Fe^{3+/2+}$, $Ni^{3+/2+}$, $Co^{3+/2+}$, $Cu^{2+/+}$, $[Fe(CN)_6]^{3-/4-}$, $Fe_4[Fe(CN)_6]_3{}^{0/4-}$, $[Co(CN)_6]^{3-/4-}$, $[Fe(Cyclopentadienyl)_2]^{0/+}$.

Als Gegenionen für Metallionen und kationische Komplexe kommen alle redox-inerten Anionen $X^-$, wie sie

später noch genauer beschrieben werden, in Frage, als Gegenionen der anionischen Komplexe alle redox-inerten Kationen $M'^{+}$ in Frage, beispielsweise Alkalimetalle oder quaternierte Ammoniumsalze wie $Na^+$, $K^+$, $N(CH_3)_4^-$, $N(C_4H_9)_4^+$, $C_6H_5CH_2N(CH_3)_3^+$ und andere.

Bevorzugt ist eine elektrochrome Anzeigevorrichtung, in der

$OX_2$ für einen Rest der Formeln (II), (III), (IV), (V) oder (CI) steht,

worin

$R^2$, $R^3$, $R^4$, $R^5$, $R^8$ und $R^9$ unabhängig voneinander $C_1$- bis $C_{12}$-Alkyl, $C_2$- bis $C_8$-Alkenyl, $C_5$- bis $C_7$-Cycloalkyl, $C_7$- bis $C_{15}$-Aralkyl oder $C_6$- bis $C_{10}$-Aryl bedeuten,

$R^6$ und $R^7$ unabhängig voneinander Wasserstoff, Methyl, Ethyl, Methoxy, Ethoxy, Fluor, Chlor, Brom, Cyan, Nitro, Methoxycarbonyl oder Ethoxycarbonyl bedeuten,

$R^{10}$, $R^{11}$; $R^{12}$, $R^{13}$ und $R^{14}$, $R^{15}$ unabhängig voneinander für Wasserstoff oder, falls $Z^1$ eine direkte Bindung bedeutet, paarweise eine $-(CH_2)_2-$, $-(CH_2)_3-$oder -CH=CH-Brücke stehen,

oder

$R^4$; $R^5$ und $R^8$; $R^9$ unabhängig voneinander paarweise eine $-(CH_2)_2-$ oder $-(CH_2)_3-$Brücke bedeuten, falls $Z^1$eine direkte Bindung bedeutet, und dann

$R^{69}$ bis $R^{74}$ unabhängig voneinander Wasserstoff oder $C_1$- bis $C_4$-Alkyl bedeuten,

$E^1$ und $E^2$ gleich sind und O, S, $NR^1$ oder $C(CH_3)_2$ bedeuten oder gemeinsam eine $-N-(CH_2)_2-N-$Brücke bilden,

$R^1$ $C_1$- bis $C_{12}$-Alkyl, $C_2$- bis $C_4$-Alkenyl, $C_5$- bis $C_7$-Cycloalkyl, $C_7$- bis $C_{15}$-Aralkyl oder $C_6$- bis $C_{10}$-Aryl bedeutet,

$Z^1$ eine direkte Bindung, -CH=CH-, $-C(CH_3)=CH-$, -C(CN)=CH-, $-C\equiv C-$ oder -CH=N-N=CH- bedeutet,

$Z^2$ $-(CH_2)_r-$ oder $-CH_2-C_6H_4-p-CH_2-$ bedeutet,

r eine ganze Zahl zwischen 1 und 6 bedeutet,

$R^{101}$ bis $R^{103}$ unabhängig voneinander für einen Rest der Formeln

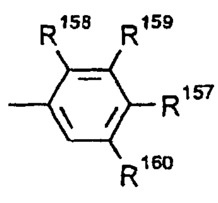

(CXIX),

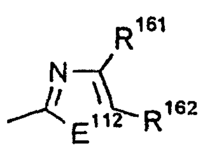

(CXX),

stehen, worin

| | |
|---|---|
| $R^{157}$ bis $R^{162}$ | unabhängig voneinander Wasserstoff, $C_1$- bis $C_6$-Alkyl, $C_1$- bis $C_6$-Alkoxy, Halogen, Cyano, Nitro, Bis-($C_1$- bis $C_4$-alkyl)amino, Tris-($C_1$- bis $C_4$-alkyl) ammonio, $C_1$- bis $C_4$-Alkoxycarbonyl oder COOH bedeuten oder paarweise nebeneinander stehende Reste geminsam eine $-O-(CH_2)_{2-3}-$, $-O-(CH_2)_{1-2}-O-$, $NR^{163}-(CH_2)_{2-3}-$ oder $NR^{163}-(CH_2)_{1-2}-O$-Brücke bilden oder |
| $R^{158}$; $R^{159}$ und/oder $R^{161}$; $R^{162}$ | eine -CH=CH-CH=CH-Brücke bilden, die durch Methyl, Methoxy oder Chlor substituiert sein kann, |
| $R^{163}$ | Wasserstoff oder $C_1$- bis $C_4$-Alkyl bedeutet, |
| $E^{112}$ | O, S oder $NR^{164}$ bedeutet, |
| $R^{164}$ | Wasserstoff, $C_1$- bis $C_{18}$-Alkyl, $C_2$- bis $C_{12}$-Alkenyl, $C_4$- bis $C_7$-Cycloalkyl, $C_7$- bis $C_{15}$-Aralkyl oder $C_6$- bis $C_{10}$-Aryl bedeutet und |
| $X^-$ | ein unter den Bedingungen redox-inertes, farbloses Anion bedeutet, |
| $RED_1$ | für einen der Reste eines anodischen Redoxsystems der Formeln (X), (XI), (XII), (XIII), (XVI), (XVII), (XVIII) oder (XX) steht, |
| $R^{28}$ bis $R^{31}$, $R^{34}$, $R^{35}$, $R^{38}$, $R^{39}$, $R^{46}$, $R^{53}$ und $R^{54}$ | unabhängig voneinander $C_1$- bis $C_{12}$-Alkyl, $C_2$- bis $C_8$-Alkenyl, $C_5$- bis $C_7$-Cycloalkyl, $C_7$- bis $C_{15}$-Aralkyl oder $C_6$- bis $C_{10}$-Aryl bedeuten, |
| $R^{32}$, $R^{33}$, $R^{36}$, $R^{37}$, $R^{40}$, $R^{41}$, $R^{47}$, $R^{48}$, $R^{49}$ bis $R^{52}$, $R^{55}$ und $R^{56}$ | unabhängig voneinander Wasserstoff, Methyl, Ethyl, Methoxy, Ethoxy, Fluor, Chlor, Brom, Cyan, Nitro, Methoxycarbonyl, Ethoxycarbonyl oder Phenyl bedeuten, |
| $R^{48}$ | zusätzlich $NR^{75}R^{76}$ bedeutet, |
| $Z^3$ | eine direkte Bindung, eine -CH=CH- oder -N=N-Brücke bedeutet, |
| $=Z^4=$ | eine direkte Doppelbindung, eine =CH-CH= oder =N-N= -Brücke bedeutet, |
| $E^3$ bis $E^5$, $E^{10}$ und $E^{11}$ | unabhängig voneinander O, S, $NR^{59}$ oder $C(CH_3)_2$ bedeuten, $E^3$ und $E^4$ aber die gleiche Bedeutung haben, |
| $E^6$ bis $E^9$ | untereinander gleich sind und S, Se oder $NR^{59}$ bedeuten und $E^5$ zusätzlich Wasserstoff bedeutet, |
| $R^{59}$, $R^{75}$ und $R^{76}$ | unabhängig voneinander $C_1$- bis $C_{12}$-Alkyl, $C_2$- bis $C_8$-Alkenyl, $C_5$- bis $C_7$-Cycloalkyl, $C_7$- bis $C_{15}$-Aralkyl oder $C_6$- bis $C_{10}$-Aryl bedeutet und $R^{75}$ zusätzlich Wasserstoff bedeutet oder $R^{75}$ und $R^{76}$ in der Bedeutung von $NR^{75}R^{76}$ zusammen mit dem N-Atom, an das sie gebunden sind, Pyrrolidino, |

Piperidino oder Morpholino bedeuten,

$R^{61}$, $R^{62}$, $R^{67}$ und $R^{68}$ unabhängig voneinander Wasserstoff, $C_1$- bis $C_4$-Alkyl, Methoxycarbonyl, Ethoxycarbonyl oder Phenyl bedeuten oder paarweise eine $-(CH_2)_3$- oder $-(CH_2)_4$-Brücke bilden,

$R^{63}$ bis $R^{66}$ Wasserstoff bedeuten

v eine ganze Zahl von 1 bis 6 bedeutet.

Ebenfalls bevorzugt ist eine elektrochrome Anzeigevorrichtung, die eine der Verbindungen der Formeln (Ia) bis (Id) enthält,
worin

$OX_2$ für einen der Reste der Formeln (II), (III), (IV) oder (V) steht,

wobei die Bindung zum Brückenglied B über einen der Reste $R^2$ bis $R^{11}$ oder im Falle, daß $E^1$ oder $E^2$ für $NR^1$ steht über $R^1$ erfolgt und die genannten Reste dann für eine direkte Bindung stehen und alle anderen Reste die oben angeführte bevorzugte Bedeutung besitzen,

$RED_1$ für einen der Reste der Formeln (X), (XI), (XII), (XIII), (XVI), (XVII), (XVIII) oder (XX) steht,

wobei die Bindung zum Brückenglied B über einen der Reste $R^{28}$ bis $R^{41}$, $R^{46}$ bis $R^{56}$, $R^{61}$, $R^{62}$, $R^{67}$, $R^{68}$ oder im Falle, daß einer der Reste $E^3$ bis $E^{11}$ für $NR^{59}$ steht, über $R^{59}$ erfolgt und die genannten Reste dann für eine direkte Bindung stehen und alle anderen Reste die oben angeführte bevorzugte Bedeutung besitzen, und

B für eine Brücke der Formeln $-(CH_2)_n-$, $-(CH_2)_m-O-(CH_2)_p-$, $-(CH_2)_m-NR^{60}-(CH_2)_p-$, $-(CH_2)_m-C_6H_4-(CH_2)_p-$, $-[O-(CH_2)_p]_o-O-$, $-[NR^{60}-(CH_2)_p]_o-NR^{60}-$, $-[C_6H_4-(CH_2)_p]_o-C_6H_4-$, $-(CH_2)_m-OCO-C_6H_4-COO-(CH_2)_p-$, $-(CH_2)_m-NHCO-C_6H_4-CONH-(CH_2)_p-$, $-(CH_2)_m-NHCONH-C_6H_4-NHCONH-(CH_2)_p-$, $-(CH_2)_m-OCO-(CH_2)_t-COO-(CH_2)_p-$, $-(CH_2)_m-NHCO-(CH_2)_t-CONH-(CH_2)_p-$, $-(CH_2)_m-NHCONH-(CH_2)_t-NHCONH-(CH_2)_p-$ steht,

$R^{60}$ Methyl, Ethyl, Benzyl oder Phenyl bedeutet,

n eine ganze Zahl von 1 bis 10 bedeutet,

m und p unabhängig voneinander eine ganze Zahl von 0 bis 4 bedeuten,

o eine ganze Zahl von 0 bis 2 bedeutet und

t eine ganze Zahl von 1 bis 6 bedeutet.

Ebenfalls bevorzugt ist eine elektrochrome Anzeigevorrichtung, die Mischungen der oben allgemein und bevorzugt genannten elektrochromen Substanzen enthält. Beispiele für solche Mischungen sind
(II) + (CI) + (XVI), (II) + (IV) + (XII), (Ia) + (II)+ (XVI), (Ia) + (CI), ohne daß dadurch irgendeine Einschränkung ausgedrückt werden soll.

Die Mischungsverhältnisse sind in weiten Grenzen variabel. Sie erlauben die Optimierung eines gewünschten Farbtons und/oder die Optimierung der gewünschten Dynamik (s. u.) der Anzeigevorrichtung.

In den oben genannten Substituentenbedeutungen sind Alkylreste, auch abgewandelte, wie z. B. Alkoxy- oder Aralkylreste, vorzugsweise solche mit 1 bis 12 C-Atomen, insbesondere mit 1 bis 8 C-Atomen, sofern nichts anderes angegeben ist. Sie können geradkettig oder verzweigt sein und gegebenenfalls weitere Substituenten tragen wie $C_1$- bis $C_4$-Alkoxy, Fluor, Chlor, Hydroxy, Cyano, $C_1$bis $C_4$-Alkoxycarbonyl oder COOH.

Unter Cycloalkylresten werden vorzugsweise solche mit 3 bis 7 C-Atomen, insbesondere mit 5 oder 6 C-Atomen verstanden.

Alkenylreste sind vorzugsweise solche mit 2 bis 8 C-Atomen, insbesondere 2 bis 4 C-Atomen.

Arylreste, auch solche in Aralkylresten, sind Phenyl oder Naphthylreste, insbesondere Phenylreste. Sie können durch 1 bis 3 der folgenden Reste substituiert sein: $C_1$- bis $C_6$-Alkyl, $C_1$- bis $C_6$-Alkoxy, Fluor, Chlor, Brom, Cyano, Hydroxy, $C_1$- bis $C_6$-Alkoxycarbonyl oder Nitro. Zwei benachbarte Reste können auch einen Ring bilden.

Unter gegebenenfalls benzanellierten aromatischen oder quasiaromatischen fünfoder sechsgliedrigen heterocyclischen Ringen werden insbesondere Imidazol, Benzimidazol, Oxazol, Benzoxazol, Thiazol, Benzthiazol, Indol, Pyrazol, Triazol, Thiophen, Isothiazol, Benzisothiazol, 1,3,4- oder 1,2,4-Thiadiazol, Pyridin, Chinolin, Pyrimidin und Pyrazin verstanden. Sie können durch 1 bis 3 der folgenden Reste substituiert sein: $C_1$- bis $C_6$-Alkyl, $C_1$- bis $C_6$-Alkoxy, Fluor, Chlor, Brom, Cyano, Nitro, Hydroxy, Mono- oder Di-$C_1$- bis $C_6$-alkylamino, $C_1$bis $C_6$-Alkoxycarbonyl, $C_1$- bis $C_6$-Alkylsulfonyl, $C_1$- bis $C_6$- Alkanoylamino, Phenyl oder Naphthyl. Zwei benachbarte Reste können auch einen Ring bilden.

Die elektrochromen Substanzen sind entweder bekannt (Topics in Current Chemistry, Vol. 92, S. 1-44, (1980), Angew. Chem. 90, 927 (1978), Adv. Mater. 3, 225, (1991), DE-OS 3.917.323, J. Am. Chem. Soc. 117, 8528 (1995), J. C. S. Perkin II 1990, 1777, DE-OS 4.435.211, EP-A 476.456, EP-A 476.457, DE-OS 4.007.058, J. Org. Chem. 57, 1849 (1992) und J. Am. Chem. Soc. 99, 6120, 6122 (1977) oder lassen sich analog herstellen. Die Verbindungen der Formel (I) lassen sich aus an sich bekannten Bausteinen beispielsweise nach folgendem Schema synthetisieren:

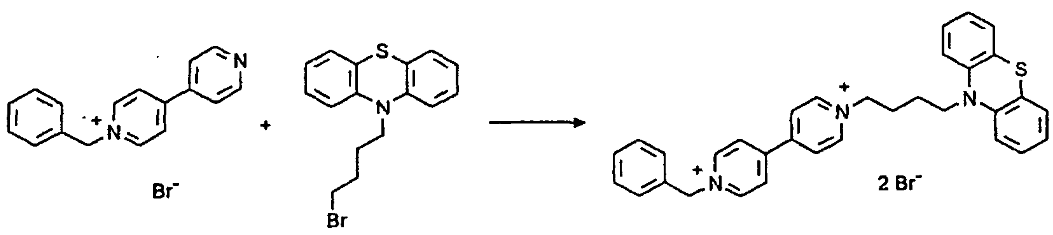

Synthetisch bedingte Ionen wie Bromid werden im Anschluß gegen redox-inerte Ionen ausgetauscht.

Die erfindungsgemäße elektrochrome Anzeigevorrichtung besteht aus zwei lichtdurchlässigen Platten, beispielsweise aus Glas oder Kunststoff wie z. B. Polycarbonat, die mit einer elektrisch leitfähigen, lichtdurchlässigen Schicht versehen sind. Diese leitfähige Schicht besteht beispielsweise aus Indium-Zinn-Oxid (ITO), Antimon- oder Fluor-dotiertem Zinnoxid, Antimon- oder Aluminium-dotiertem Zinkoxid, Zinnoxid oder leitfähigen organischen Polymeren wie beispielsweise gegebenenfalls substituierte Polythienyle, Polypyrrole, Polyaniline, Polyacetylen. Man erhält so eine transmissive elektrochrome Anzeigevorrichtung, die im durchfallenden Licht betrachtet werden kann. Eine der beiden Platten kann auch verspiegelt sein. Man erhält so eine reflektierende elektrochrome Anzeigevorrichtung. Zur Verspiegelung können Silber, Chrom, Palladium, Rhodium, Aluminium oder andere bekannte Materialien eingesetzt werden. Diese Verspiegelungsschicht kann selbst als leitfähige Schicht dienen. Mindestens eine der beiden leitfähigen Schichten beziehungsweise beide sind in elektrisch voneinander getrennte Segmente aufgeteilt, die einzeln kontaktiert sind. Es kann aber auch nur eine der beiden Platten leitfähig beschichtet und in Segmente aufgeteilt sein. Die Trennung der Segmente kann beispielsweise erfolgen durch mechanisches Entfernen der leitfähigen Schicht beispielsweise durch Ritzen, Kratzen, Schaben oder Fräsen oder auf chemischem Wege beispielsweise durch Ätzen mittels beispielsweise einer salzsauren Lösung von $FeCl_2$ und $SnCl_2$. Diese Entfernung der leitfähigen Schicht kann über Masken, z. B. solchen aus Photolack, örtlich gesteuert werden. Es können aber auch die elektrisch getrennten Segmente durch gezieltes, z. B. mittels Masken, Aufbringen, z. B. Sputtern oder Drucken, der leitfähigen Schicht hergestellt werden. Die Kontaktierung der Segmente erfolgt beispielsweise mittels feiner Streifen aus leitfähigem Material, womit das Segment mit einem Kontakt am Rande der elektrochromen Vorrichtung elektrisch leitend verbunden ist. Diese feinen Kontaktstreifen können entweder aus dem gleichen Material bestehen wie die leitfähige Schicht selbst und beispielsweise bei deren Aufteilung in Segmente wie oben beschrieben mit hergestellt werden. Sie können aber auch z. B. zur Verbesserung der Leitfähigkeit aus anderem Material wie feinen metallischen Leitern, beispielsweise aus Kupfer oder Silber, bestehen. Auch eine Kombination aus metallischem Material und dem Material der leitfähigen Beschichtung ist möglich. Diese metallischen Leiter können beispielsweise entweder in feiner Drahtform aufgebracht, z. B. aufgeklebt, werden oder aber aufgedruckt werden. Alle diese eben beschriebnenen Techniken sind im allgemeinen aus der Herstellung von Flüssigkristalldisplays (LCD) bekannt.

Die Anzeigen können im Durchlicht oder auch reflektiv über eine Verspiegelung betrachtet werden.

Die beiden Platten werden mit den einander zugewandten leitfähig beschichteten und in Segmente aufgeteilten Seiten, getrennt durch beispielsweise einen Dichtungsring, aufeinander gelegt und am Rand miteinander verklebt. Der Dichtungsring kann beispielsweise aus Kunststoff oder Dünnglas oder einem anderen, nichtleitenden und gegenüber der elektrochromen Flüssigkeit inerten Material bestehen. Beispielsweise kann der Dichtungsring auch durch einen thermisch oder photochemisch aushärtenden Klebstoff hergestellt werden, wobei dem Klebstoff Abstandshalter beigemischt sein können. Beispiele für solche Klebstoffe sind Epoxi-Harze und Acrylate. Der Abstand zwischen den Platten kann aber auch hergestellt werden mittels anderer Abstandshalter, beispielsweise kleiner Kunststoff- oder Glaskügelchen oder bestimmter Sandfraktionen, wobei dann diese Abstandshalter zusammen mit dem Kleber aufgetragen werden und dann gemeinsam den Dichtungsring bilden. Der Dichtungsring enthält eine oder zwei Aussparungen, die zum Befüllen der elektrochromen Vorrichtung dienen. Der Abstand zwischen den beiden Platten liegt zwischen 0.005 und 2 mm, vorzugsweise 0.02 bis 0.5 mm. Bei großflächigen Anzeigevorrichtungen, insbesondere solchen aus Kunststoff, kann es vorteilhaft sein, mittels Abstandshaltern, beispielsweise Kunststoffkügelchen gleichen Durchmessers, die über die Fläche der Anzeigevorrichtung verteilt sind, den Abstand der Platten konstant zu halten.

Diese Anzeigevorrichtung wird mit einer elektrochromen Flüssigkeit befüllt über die Öffnungen im Dichtungsring, wobei stets unter Feuchtigkeits- und Sauerstoffausschluß gearbeitet werden muß. Das Befüllen kann beispielsweise mittels feiner Kanülen oder aber über die Vakuumbefülltechnik erfolgen, bei der die Vorrichtung und die Flüssigkeit, eingefüllt in eine flache Schale, in einen evakuierbaren Behälter eingebracht werden. Dieser wird evakuiert. Dann wird die Anzeigevorrichtung, die nur eine Befüllöffnung enthält, mit dieser Öffnung in die Flüssigkeit getaucht. Beim Entfernen des Vakuums wird nun die Flüssigkeit in die Anzeigevorrichtung gedrückt.

Anschließend werden die Befüllöffnungen dicht verschlossen und verklebt.

Die erfindungsgemäße elektrochrome Anzeigevorrichtung enthält mindestens ein Lösungsmittel, in dem die elektrochromen Substanzen, gegebenenfalls ein Leitsalz und gegebenenfalls weitere Zusätze gelöst sind. Das Lösungsmittel kann auch gelförmig verdickt sein, beispielsweise durch Polyelektrolyte, poröse Feststoffe oder Nanopartikel mit großer aktiver Oberfläche.

Geeignete Lösungsmittel sind alle unter den gewählten Spannungen redox-inerten Lösungsmittel, die keine Elektrophile oder Nukleophile abspalten können oder selber als ausreichend starke Elektrophile oder Nukleophile reagieren und so mit den farbigen Radikalionen reagieren könnten. Beispiele sind Propylencarbonat, γ-Butyrolacton, Acetonitril, Propionitril, Glutaronitril, Methylglutarnitril, 3,3'-Oxydipropionitril, Hydroxypropionitril, Dimethylformamid, N-Methylpyrrolidon, Sulfolan, 3-Methylsulfolan oder Mischungen davon. Bevorzugt sind Propylencarbonat und Mischungen davon mit Glutaronitril.

Die erfindungsgemäße elektrochrome Flüssigkeit kann, mindestens ein inertes Leitsalz enthalten. Insbesondere wenn wenigstens eine der Substanzen des Redoxpaares $RED_1/OX_2$ ionischer Natur ist, kann auf den Zusatz eines Leitsalzes verzichtet werden.

Als inertes Leitsalz sind Lithium-, Natrium- und Tetraalkylammoniumsalze geeignet, insbesondere letztere. Die Alkylgruppen können zwischen 1 und 18 C-Atome aufweisen und gleich oder verschieden sein. Bevorzugt ist Tetrabutylammonium. Als Anionen zu diesen Salzen, aber auch als Anionen $X^-$ in den Formeln (II) bis (VI), (CI), (CII) und (CV) bis (CVII) in den Metallsalzen kommen alle redox-inerten, farblosen Anionen in Frage. Beispiele sind Tetrafluoroborat, Tetraphenylborat, Cyano-triphenylborat, Perchlorat, Chlorid, Nitrat, Sulfat, Phosphat, Methanesulfonat, Ethanesulfonat, Tetradecanesulfonat, Pentadecanesulfonat, Trifluormethansulfonat, Perfluorbutansulfonat, Perfluoroctansulfonat, Benzolsulfonat, Chlorbenzosulfonat, Toluolsulfonat, Butylbenzosulfonat, tert. Butylbenzolsulfonat, Dodecylbenzosulfonat, Trifluormethylbenzosulfonat, Hexafluorophosphat, Hexafluoroarsenat und Hexafluorosilikat, 7,8- or 7,9-Dicarba-nidoundecarbonat(1-) or (2-), die gegebenenfalls an den B- und/oder C-Atomen durch eine oder zwei Methyl-, Ethyl-, Butyl-, or Phenyl-Gruppen substituiert sind, Dodecahydro-dicarbadodecaborat(2-) oder B-Methyl-C-phenyl-dodecahydro-dicarbadodecaborat(1-). Im Falle mehrwertiger Ionen steht $X^-$ für ein Äquivalent, beispielsweise für 1/2 $SiF_6^{2-}$.

Die Leitsalze werden vorzugsweise im Bereich 0 bis 1 mol/l eingesetzt.

Als weitere Zusätze können Verdicker eingesetzt werden, um die Viskosität der elektroaktiven Lösung zu steuern. Das kann Bedeutung haben zur Vermeidung von Segretation, d.h. der Bildung von streifiger oder fleckiger Farbbildung bei längerem Betrieb der elektrochromen Anzeigevorrichtung im eingeschalteten Zustand, und zur Steuerung der Ausbleichgeschwindigkeit nach Abschalten des Stroms.

Als Verdicker eignen sich alle für diesen Zweck üblichen Verbindungen wie z. B. Polyacrylat, Polymethacrylat (Luctite L ®), Polycarbonat oder Polyurethan.

Als weitere Zusätze für die elektrochrome Flüssigkeit kommen UV-Absorber zur Verbesserung der Lichtechtheit in Frage. Beispiele sind Uvinul® 3000 (2,4-Dihydroxybenzophenon, BASF), SANDUVOR® 3035 (2-Hydroxy-4-n-octyloxybenzophenon, Clariant), Tinuvin® 571 (2-(2H-Benzotriazol-2-yl)-6-dodecyl-4-methylphenol, Ciba), Cyasorb 24™ (2,2'-Dihydroxy-4-methoxybenzophenon, American Cyanamid Company), UVINUL® 3035 (Ethyl-2-cyano-3,3-diphenylacrylat, BASF), Uvinul® 3039 (2-Ethylhexyl-2-cyano-3,3-diphenylacrylat, BASF), UVINUL® 3088 (2-Ethylhexyl-p-methoxycinnamat, BASF), CHIMASORB® 90 (2-Hydroxy-4-methoxy-benzophenon, Ciba).

Die UV-Absorber werden im Bereich 0.01 bis 2 mol/l, vorzugsweise 0.04 bis 1 mol/l eingesetzt. Sie können auch gemischt werden.

Die elektrochrome Flüssigkeit enthält die elektrochromen Substanzen $OX_2$ und $RED_1$, insbesondere die der Formeln (I) bis (XX) und (CI) bis (CIV) jeweils in einer Konzentration von mindestens $10^{-4}$ mol/l, vorzugsweise 0.001 bis 0.5 mol/l. Die Gesamtkonzentration aller enthaltenen elektrochromen Substanzen liegt vorzugsweise unter 1 mol/l.

Zum Betrieb der erfindungsgemäßen elektrochromen Anzeigevorrichtung wird konstanter, gepulster oder in seiner Amplitude sich verändernder, beispielsweise sich sinusförmig verändernder, Gleichstrom benutzt. Die Spannung hängt ab von der gewünschten Farbtiefe, insbesondere aber von den Reduktions- bzw. Oxidationspotentialen der

verwendeten $OX_2$ und $RED_1$. Solche Potentiale können beispielsweise aus Topics in Current Chemistry, Volume 92, S. 1-44, (1980) oder Angew. Chem. 90, 927 (1978) oder der dort zitierten Literatur entnommen werden. Die Differenz ihrer Potentiale ist ein Richtwert für die erforderliche Spannung, jedoch kann die elektrochrome Anzeigevorrichtung bereits bei niedrigerer oder auch mit höherer Spannung betrieben werden. In vielen Fällen, z. B. bei Verwendung von $OX_2$ = Formel (II) oder (IV) und $RED_1$ = Formel (X), (XII), (XVI) oder (XVII) oder deren Verknüpfung über eine Brücke gemäß Formel (I), insbesondere Formel (Ia) bis (Id), liegt diese zum Betrieb nötige Potentialdifferenz $\leq$ 1 V. Solche elektrochromen Anzeigevorrichtungen können deshalb in einfacher Weise mit dem Strom aus photovoltaischen Siliciumzellen versorgt werden.

Wird die Spannung abgeschaltet, geht die erfindungsgemäße elektrochrome Anzeigevorrichtung wieder in ihren ursprünglichen Zustand zurück. Diese Löschung kann erheblich beschleunigt werden, wenn die kontaktierten Segmente kurzgeschlossen werden. Auch durch mehrmaliges Umpolen der Spannung, gegebenenfalls auch bei gleichzeitiger Erniedrigung der Spannung, kann die Anzeige sehr rasch gelöscht werden.

Durch Variation der Schichtdicke der elektrochromen Anzeigevorrichtung, der Viskosität der elektrochromen Lösung und/oder der Diffusions- oder Driftfähigkeit der elektrochromen Substanzen lassen sich die Einschalt- und Ausschaltzeiten der Anzeigevorrichtung in weiten Grenzen beeinflussen. So zeigen beispielsweise dünne Schichten kürzere Schaltzeiten als dicke. Es lassen sich also schnell und langsam schaltbare Anzeigevorrichtungen bauen und so den jeweiligen Einsatzzwecken optimal anpassen.

Bei langsamen Anzeigevorrichtungen kann zur Aufrechterhaltung der angezeigten Information im eingeschalteten Zustand ein Stromspar- oder Refresh-Mode benutzt werden. Nach Aufbau der anzuzeigenden Information beispielsweise durch konstante oder sich mit hoher Frequenz verändernder oder gepulster Gleichspannung ausreichender Höhe wird auf gepulste oder sich verändernde Gleichspannung niedriger Frequenz umgeschaltet, wobei während der Phasen, in denen die Spannung Null beträgt, die Kontaktierung der Segmente nicht kurzgeschlossen wird. Diese niedrige Frequenz kann beispielsweise im Bereich von 1 Hz oder niedriger liegen, wobei die Dauer der Einschalt- und Ausschaltphasen nicht gleichlang zu sein brauchen, sondern beispielsweise die Ausschaltphasen deutlich länger sein können. Da sich während der Strompausen im nicht kurzgeschlossenen Zustand die Farbtiefe der angezeigten Information nur langsam abbaut, genügen relativ kurz Stromimpulse, um diese Verluste in der anschließenden Refresh-Phase wieder auszugleichen. Man erhält so ein flackerfreies Bild mit nahezu konstanter Farbtiefe, für dessen Aufrechterhaltung aber nur ein Bruchteil des Stromes benötigt wird, der bei permanentem Stromfluß anfallen würde.

In einer besonderen Anwendungsform der erfindungsgemäßen elektrochromen Anzeigevorrichtung ist eine solche Vorrichtung in einen abblendbaren Autospiegel integriert, der somit zuschaltbare Informationen enthält. Ein solcher Autospiegel, der eine zuschaltbare elektrochrome Anzeigevorrichtung enthält, ist ebenso Gegenstand der Erfindung. Der Aufbau dieser Vorrichtung ist prinzipiell wie oben beschrieben. Jedoch ist eine der beiden Glas- oder Kunststoffplatten auf einer Seite verspiegelt. Diese Verspiegelung kann auf der Seite der Platte, die der elektrochromen Flüssigkeit abgewandt ist, liegen. Es kann aber auch die Verspiegelungsschicht der elektrochromen Flüssigkeit zugewandt sein. Dann wird vorteilhaft diese Verspiegelungsschicht auch als leitfähige Schicht benutzt. In mindestens einer der beiden leitfähigen Schichten oder auch beiden sind nun Segmente von der restlichen Fläche elektrisch getrennt ausgeführt und kontaktiert.

Diese Segmente können beispielsweise so ausgeführt sein, daß sich damit in der oben beschriebenen Weise beliebige Buchstaben oder Ziffern darstellen lassen. Sie können aber auch so ausgebildet sein, daß die Segmente ganze Buchstaben oder Ziffern oder aber ganze Wörter oder Zahlen darstellen. Eine solche Anzeigevorrichtung ist nun in der Lage, als abblendbarer Autospiegel zu funktionieren, d. h. über eine Helligkeits-abhängige elektronische Steuerung den ganzen Spiegel abzudunkeln, um beispielsweise die Blendung des Fahrers durch Scheinwerfer nachfolgender Fahrzeuge zu vermeiden. In einem solchen Fall werden die einzelnen Segmente und die restliche Fläche der Anzeigevorrichtung in gleicher Weise mit Strom beschaltet. Durch die spezielle Bauform ist es aber möglich, über die einzelnen Segmente zusätzliche Informationen zu liefern, beispielsweise über die Außentemperatur ("Vorsicht! Glättebildung"), über den Abstand zum vorausfahrenden Auto ("Abstand!") oder über sonstige Gefahrenquellen, die beispielsweise mittels Sensoren aufspürbar sind. Im hellen, ausgeschalteten Zustand der restlichen Spiegelfläche erscheinen diese Informationen dunkel - die entsprechenden Segmente sind stromführend -, im dunklen, eingeschalteten Zustand des Spiegels erscheinen diese Informationen hell - die entsprechenden Segmente sind also ausgeschaltet. Es sind auch mehrere solcher Anzeigen in einem Autospiegel möglich.

Die erfindungsgemäße elektrochrome Anzeigevorrichtung ist dynamisch und selbstjustierend. An den Elektroden werden die elektrochromen Substanzen $RED_1$ und $OX_2$ in ihre jeweils andersfarbige, beispielsweise farbige oxidierte bzw. reduzierte Form $OX_1$ und $RED_2$ überführt, die sich dann in Richtung der Gegenelektrode in Bewegung setzen. Dabei ändert sich der Ladungszustand der Moleküle. Diese gerichtete Bewegung heißt Drift. Durch den Drift der farbigen Moleküle im elektrischen Feld wird eine unkontrollierte, laterale Diffusion in der elektrochromen Flüssigkeit verhindert. Die farbigen Moleküle werden gezielt aufeinander zugeführt. Bei Begegnung zweier Moleküle $OX_1$ und $RED_2$ im Inneren der elektrochromen Flüssigkeit, aber auch in der Nähe oder im Inneren der Helmholtzschen Doppelschicht, tauschen diese eines oder mehrere Elektronen aus unter Rückbildung der beispielsweise farblosen Formen

$RED_1$ und $OX_2$, die nun wiederum an die Elektroden diffundieren oder, falls sie geladen sind, driften können. Während des Stromflusses entsteht so ein makroskopisches statisches, mikroskopisch aber dynamisches und dennoch geordnetes Bild.

Statt der Drift ganzer Moleküle können auch die Elektronen über intermolekularen Austausch von einer elektrochromen Substanz zur anderen weitergegeben werden und so durch die Flüssigkeitsschicht zwischen den Elektroden transportiert werden.

Durch diese über Drift im elektrischen Feld, Diffussion und Rekombination gesteuerte Dynamik ist die erfindungsgemäße elektrochrome Anzeigevorrichtung unempfindlich gegenüber Störungen beispielsweise durch Bewegungen in der elektrochromen Flüssigkeit. Solche Bewegungen können beispielsweise entstehen, wenn auf die Platten einer solchen Vorrichtung Druck ausgeübt wird, insbesondere, wenn die Platten aus Kunststoff gefertigt sind und/oder bei größeren geometrischen Abmessungen der Anzeigevorrichtung. Diese Bewegung kann zu einem Verschieben der gefärbten Flüssigkeitszonen zwischen elektrisch angesteuerten Segmenten führen und somit zu einem Verwischen der Konturen. Durch die eben geschilderte Dynamik werden solche verwischten Konturen rasch abgebaut und scharfe Konturen entsprechend der Formen der Segmente aufgebaut. Die Vorrichtung ist also selbstjustierend und selbstheilend.

Die eben geschilderte Dynamik führt auch zu einer scharfen Begrenzung des eingefärbten Teils der elektrochromen Flüssigkeit und somit zu einer sehr hohen Randschärfe der darzustellenden Segmente sowie zu einem hohen Kontrast. Ein Verwaschen der Konturen durch laterale Diffusion wird durch die streng gerichtete Drift unterbunden. Zusätzlich wird die Randschärfe noch durch eine Kontrastüberhöhung am Rande der Segmente verstärkt.

Die aus WO-94/23333 bekannten, eingangs erwähnten erheblichen Nachteile wie Diffusion und permanenter Stromfluß stellen sich überraschenderweise bei der erfindungsgemäßen Anzeigenvorrichtung nicht ein. Die Diffusion wird überraschenderweise bei geeigneter Auswahl elektrochromer Substanzen von der Drift überflügelt, sie ist aber in gewissem Grad zusammen mit dem permanenten Stromfluß für die selbstjustierenden Eigenschaften der Anzeigevorrichtung verantwortlich. Ohne permanenten Stromfluß verbunden mit der Dynamik des Systems bestehend aus Diffusion, Drift und Rekombination wäre diese Selbstjustierung nicht möglich und eine solche Anzeigevorrichtung würde rasch eine unscharfes, kontrastarmes und somit unbrauchbares Bild geben, wie es aus der Literatur bekannt ist.

Drift, Diffusion und Rekombination hängen von der Struktur der elektrochromen Substanzen ab. Diffusion und Drift hängen beispielsweise von der Molekülgröße und Form ab, die Drift zusätzlich beispielsweise vom Ladungszustand und der Höhe der Ladung. Die Rekombination hängt beispielsweise von der Molekülform und den Redoxpotentialen ab.

Bevorzugt ist die Verwendung solcher elektrochromen Substanzen $RED_1$ und $OX_2$ in der elektrochromen Anzeigevorrichtung, bei denen die Differenz der Ladung ihrer gefärbten Oxidations- oder Reduktionsprodukte $OX_1$ und $RED_2$ mindestens +2 beträgt. Ein Beispiel ist $OX_2$ = Formel (CI) und $RED_1$ = Formel (XII), (XVI) oder (XVII). Bevorzugt sind folglich auch solche elektrochromen Anzeigevorrichtungen, die elektrochrome Substanzen mit den eben beschriebenen Eigenschaften enthalten.

Insbesondere bevorzugt ist die Verwendung von über eine Brücke verbundenen Redoxsystemen der Formel (I), insbesondere solchen der Formeln (Ia) bis (Id), sowie die solche Redoxsysteme enthaltenden Anzeigevorrichtungen.

Ganz besonders bevorzugt ist die Verwendung solcher verbrückten Redoxsysteme der Formel (Ia, $OX_2$-B-$RED_1$) in elektrochromen Anzeigevorrichtungen, bei denen die Ladungsdifferenz zwischen der oxidierten Form $OX_2$-B-$OX_1$ und der reduzierten Form $RED_2$-B-$RED_1$ wie oben beschrieben mindestens +2 beträgt, sowie die solche Redoxsysteme enthaltenden Anzeigevorrichtungen.

Ein Beispiel für ein solches Redoxsystem der Formel (Ia) ist:

$[OX_2\text{-}B\text{-}RED_1]^{2+}$

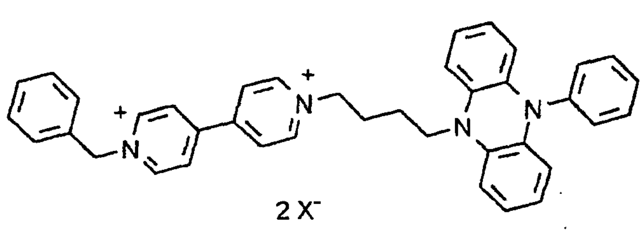

2 $X^-$

$[OX_2\text{-}B\text{-}OX_1]^{3+}$ 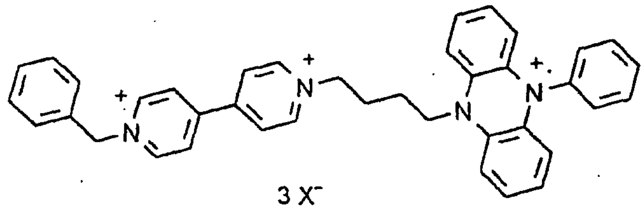

$3\ X^-$

$[RED_2\text{-}B\text{-}RED_1]^+$ 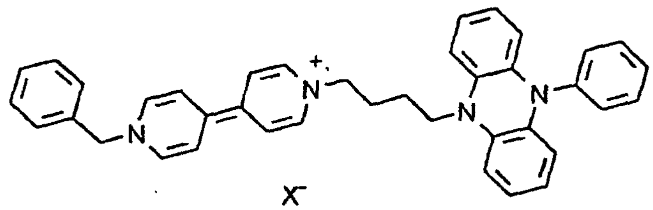

$X^-$

Bevorzugt ist auch die Verwendung solcher $OX_2$ und $RED_1$, deren entsprechende $RED_2$ und $OX_1$ beide gleichartig, beispielsweise positiv, geladen sind, sowie solche elektrochromen Substanzen enthaltenden Anzeigevorrichtungen.

**Beispiele**

**Beispiel 1**

Eine mit ITO beschichtete Glasplatte wurde mit einem handelsüblichen Photolack, z. B. Positiv 20 der Firma Kontakt Chemie, Iffezheim, auf der beschichteten Seite besprüht und im Dunkeln bei 50 bis 70 °C während 1 h getrocknet. Dann wurde die Lackschicht mit einer Folie bedeckt, die gemäß Abbildung 1 schwarze Segmente in einer transparenten Umgebung enthielt. Diese Folie. wurde gemäß einer am Computer hergestellten Vorlage mit einem Laserdrucker bedruckt. Durch diese Folie wurde nun die Photolackschicht mit UV-Licht (aus einer Quecksilber-Lampe, z. B. HBO 200W/2 der Firma Osram oder aus einer Xenon-Hochdrucklampe XBO 75W/2 der Firma Osram) während 1 bis 5 min belichtet. Die Folie wurde entfernt und die Lackschicht in einem Natronlaugebad (7 g Natriumhydroxid pro Liter Wasser) so behandelt, daß die unbelichteten Stellen abgespült wurden. Nun wurde die so vorbereitete Glasplatte in ein Bad aus 67 g $FeCl_2$ x 4 $H_2O$, 6 g $SnCl_2$ x 2 $H_2O$, 104 ml Wasser und 113 ml 37-gew.-proz. Salzsäure gelegt, wodurch die ITO-Schicht an den lackfreien, ehemals unbelichteten Stellen abgelöst wurde. Die verbliebene Lackschicht wurde mit Aceton entfernt. Man erhielt so eine Glasplatte (1), die Segmente (4), Leiterverbindungen (3) und Kontakte (2) trug.

Aus einer 0.2 mm dicken Polyethylenfolie wurde ein rechteckiger Ring ausgeschnitten. An einer seiner Längsseiten wurde ein etwa 1-2 cm langes Stück entfernt (5). Diese Folie wurde nun auf die mit ITO-beschichtete Seite einer zweiten Glasplatte (7) gelegt. Außerhalb der Folie - mit Ausnahme der Öffnung (6) - wurde ein Zweikomponentenkleber, beispielsweise UHU® plus endfest 300 der Fa. UHU GmbH, Bühl in Baden, aufgestrichen. Nun wurde die wie oben beschrieben hergestellte geätzte Glasplatte (1) so auf die Folie gelegt, daß die ITO-Schicht auf der Seite der Folie lag (s. Abbildung 2). Man ließ nun den Zweikomponentenkleber aushärten, eventuell durch leichtes Erwärmen auf ca. 40°C.

Nun wurde die Zelle unter Stickstoff- oder Argonatmosphäre mit einer Lösung von 220 mg der elektrochromen Verbindung der Formel

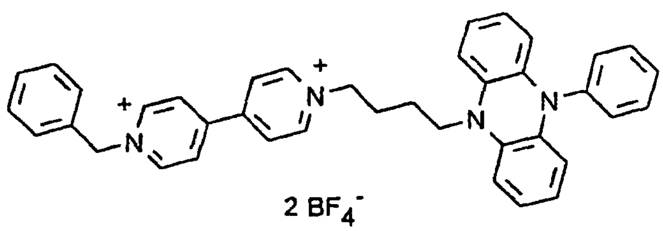

$2\ BF_4^-$

in 10 ml wasserfreiem Propylencarbonat, die unter Stickstoff- oder Argonatmosphäre hergestellt wurde, über die Öffnung (6) befüllt, beispielsweise mit Hilfe einer feinen Pipette oder durch Einziehen der Lösung im Vakuum. Die Einfüllöffnung (6) wurde nun mit einem passenden Stück Polyethylenfolie gefüllt und mit Zweikomponentenkleber dicht verschlossen.

Durch Anlegen einer Spannung von 0.8 V an die Kontakte (2) der Segmente als Kathode und die nichtgeätzte zweite Platte (7) als Anode bildete sich rasch ein tief grünlich blaues Bild der kontaktierten Segmente aus (Absorptionsmaxima bei 436, 454, 468, 570, 606, 665 nm). Es konnten so alle mittels 7 Segmenten darstellbaren Buchstaben und Ziffern tief grünlich blau auf blaßgelbem Untergrund erzeugt werden. Durch Abschalten der Spannung und Kurzschließen der Kontakte verschwand das Bild rasch wieder.

**Beispiel 2**

Es wurde die elektrochrome Anzeigevorrichtung des Beispiels 1 benutzt. Es wurden alle Segmente während 30 s mit einer Spannung von 0.8 V beschaltet. Es bildete sich eine tief grünlich blaue "8" auf blaßgelbem Grund. Dann wurde abwechselnd die Spannung für 5 s ausgeschaltet und für 5 s eingeschaltet, ohne daß die Kontakte während der Abschaltphase kurzgeschlossen wurden. Das Bild der "8" blieb in nahezu unveränderter Intensität bestehen. Schließlich wurde die Spannung abgeschaltet und die Kontakte wurden kurgeschlossen. Während 30 s war das Bild der "8" völlig verschwunden.

**Beispiel 3**

Es wurde analog zu Beispiel 1 eine elektrochrome Anzeigevorrichtung gebaut, bei der statt der Segmente ein durchgehender Schriftzug als Segment auf der einen Platte durch Ätzen hergestellt wurde. Der Schriftzug wurde 10 min als Anode und die nicht strukturierte Gegenelektrode als Kathode bei einer Betriebsspannung von 0.8 V geschaltet. Es bildete sich der Schriftzug klar strukturiert in einem kräftigem Gelb aus, wobei der Rand des Schriftzuges eine geringe Unschärfe aufwies, während der Hintergrund flächig blau gefärbt war. Nun wurde die Spannung umgepolt. Der Schriftzug färbte sich über ein Grün nach einem kräftigem Blau um, während der Hintergrund sich flächig über eine sehr helle grünliche Färbung nach einem Gelb veränderte. Nach 10 min war eine tiefblaue Schrift auf gelbem Hintergrund erreicht, wobei die Schrift eine excellente Randschärfe aufwies. Durch wiederholtes Umpolen konnte der Farbwechsel beliebig oft durchgeführt werden.

**Beispiel 4**

Es wurde eine elektrochrome Anzeigevorrichtung wie in Beispiel 3 gebaut, bei der jedoch absichtlich eine kleine Stickstoffgasblase im Zelleninneren belassen wurde. Die Anzeige wurde nun beispielsweise so geschaltet, daß der Schriftzug als Kathode und die flächige Gegenelektrode als Anode arbeiteten. Mit 0.8 V wurde wie in Beispiel 3 eine tiefblaue Schrift auf gelbem Untergrund erhalten. Wurde die Anzeigevorrichtung nun so gekippt, daß die Gasblase über diesen Schriftzug aufsteigen konnte, so verwirbelte sie die elektrochrome Flüssigkeit und damit auch das dargestellte Schriftbild. Bereits 20 bis 30 s später war aber das verwirbelte Bild komplett abgebaut und an seiner Stelle hatte sich wieder das scharfe Schriftbild wie zu Beginn des Versuchs ausgebildet.

**Beispiel 5**

Es wurde eine elektrochrome Anzeigevorrichtung wie in Beispiel 1 gebaut, wobei aber statt der Glasplatten solche aus Polycarbonat, beispielsweise MACROLON® der Firma Bayer verwendet wurden. Es wurden aber beide ITO-Schichten gemäß der Vorgehensweise des Beispiels 1 geätzt, und zwar so, daß die entsprechenden Segmente nach Aufeinanderlegen der Platten mit ihrer leitfähig beschichteten Seite völlig deckungsgleich waren. Durch Anlegen einer Spannung von 0.8 V an die verschiedenen Segmente konnte jeder beliebige Buchstabe oder Ziffer dargestellt werden. Die Anzeigevorrichtung war flexibel und zeigte auch nach Verbiegen stets ein scharfes Bild.

**Beispiel 6**

In eine mit ITO beschichtete Glasplatte wurden mit einem Glasschneider im Abstand von 2 mm parallele Linien so eingeritzt, daß die entstehenden ITO-Streifen elektrisch voneinander getrennt waren. Analog zu Beispiel 1 wurde eine Anzeigevorrichtung gebaut, wobei aber die zweite Glasplatte nicht leitfähig beschichtet war. Diese Vorrichtung wurde wie in Beispiel 1 befüllt und verschlossen. Legte man an zwei benachbarte Streifen eine Spannung von 0.8 V an, so färbte sich der Streifen am Minuspol tief blau und der Streifen am Pluspol tief gelb. Nach Abschalten der Spannung und Kurzschließen der Kontakte verschwand die Farbe innerhalb von ca. 30 s wieder. Wurden alle Streifen

alternierend an den Minuspol bzw. den Pluspol der Spannungsquelle angeschlossen, erhielt man ein Streifenmuster aus blauen und gelben Streifen, die mit hoher Randschärfe klar voneinander getrennt waren.

**Beispiele 7 bis 20**

Ganz analog konnte mit den folgenden elektrochromen Substanzen und gegebenenfalls Zusätzen eine elektrochrome Anzeigevorrichtung aufgebaut werden. Die Farbtöne sind sowohl als Mischfarben gemäß Beispiel 1 und als Einzelfarben gemäß Beispiel 6 angeführt.

Die Strukturen der in der Spalte "Zusätze" aufgeführten UV-Absorber sind S. 26 zu entnehmen.

| Beispiel | $OX_2$ | $RED_1$ | Lösungsmittel | Zusätze | Farbe |
|---|---|---|---|---|---|
| 7 | 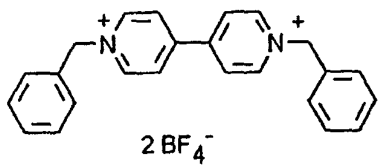 2 $BF_4^-$ | 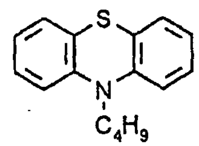 | Glutardinitril | UVINUL® 3039 | violettblau/ blau - rot |
| 8 | 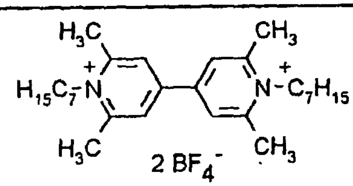 2 $BF_4^-$ | 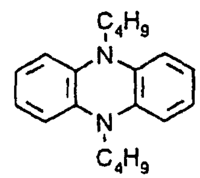 | Propylen-carbonat | $(C_4H_9)_4N^+BF_4^-$ | grünlich blau/ blau - gelb |
| 9 | 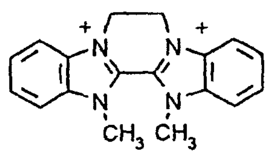 2 $ClO_4^-$ | 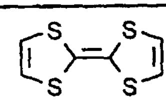 | Methylsulfolan | - | braun/ grün - rot |

| Beispiel | $OX_2$ | $RED_1$ | Lösungsmittel | Zusätze | Farbe |
|---|---|---|---|---|---|
| 10 | 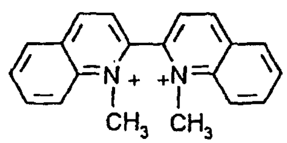 2 $BF_4^-$ | 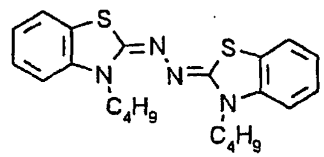 | Propylen-carbonat/Glutar-nitril 1:1 | - | grün/ grün - gelb |
| 11 | 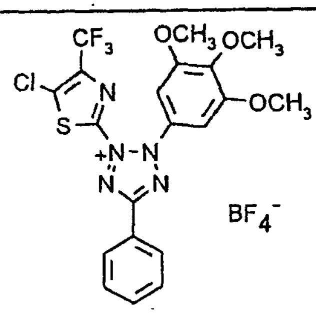 $BF_4^-$ | 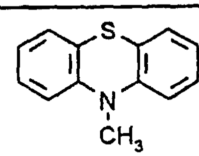 | Propylen-carbonat | Polymethylacrylat | rot/ rot - rot |

| Beispiel | $OX_2$ | $RED_1$ | Lösungsmittel | Zusätze | Farbe |
|---|---|---|---|---|---|
| 12 | 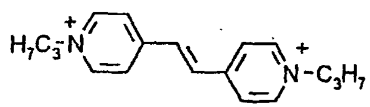 2 $PF_6^-$ + 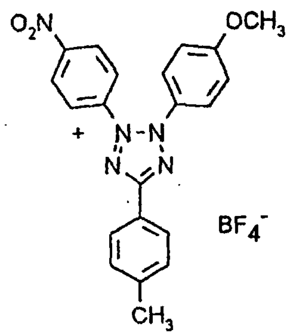 $BF_4^-$ | 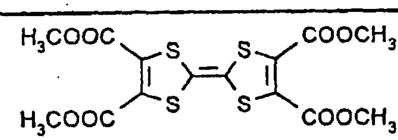 | Propylen-carbonat | - | schwarz/ grün - rot |

| Beispiel | $OX_2$-B-$RED_1$ | Lösungsmittel | Zusätze | Farbe |
|---|---|---|---|---|
| 13 | 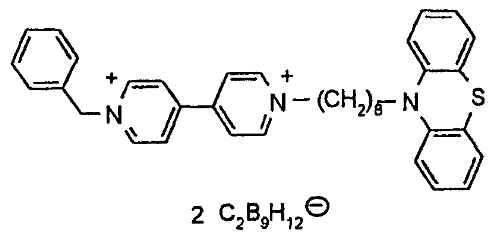 2 $C_2B_9H_{12}^{\ominus}$ | Glutardinitril | UVINUL® 3088 | violettblau/ blau - rot |
| 14 | 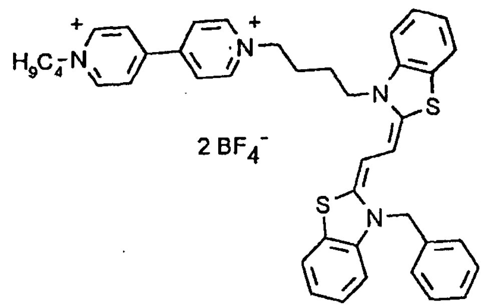 2 $BF_4^-$ | Propylen-carbonat | SANDUVOR® 3035 | grün/ blau - gelb |

| Beispiel | $OX_2$-B-$RED_1$ | Lösungsmittel | Zusätze | Farbe |
|---|---|---|---|---|
| 15 | 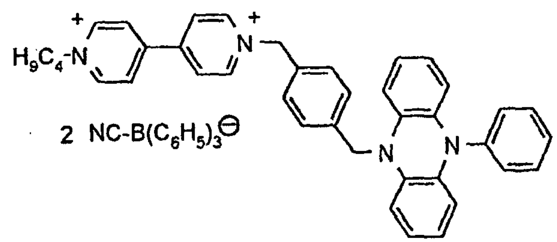 2 $NC\text{-}B(C_6H_5)_3^{\ominus}$ | Methylsulfolan/ Propylen-arbonat 1:3 | - | grünlich blau/ blau - gelb |

| Beispiel | $RED_1$-B-$OX_2$-B-$RED_1$ | Lösungsmittel | Zusätze | Farbe |
|---|---|---|---|---|
| 16 | 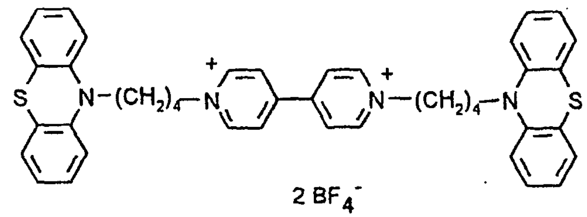 2 $BF_4^-$ | Propylen-carbonat | UVINUL® 3035 | violettblau/ balu - rot |
| 17 | 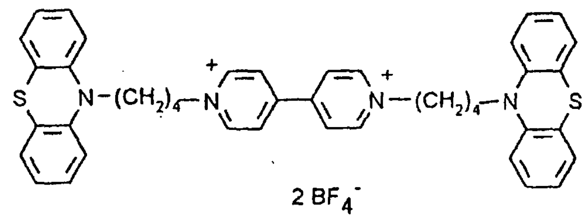 2 $BF_4^-$ | Proylen-carbonat | UVINUL® 3035 | grünlich blau/ blau - gelb |

| Beispiel | $OX_2$-B-$RED_1$ | $OX_2$ oder $RED_1$ | Lösungsmittel | Zusätze | Farbe |
|---|---|---|---|---|---|
| 18 | 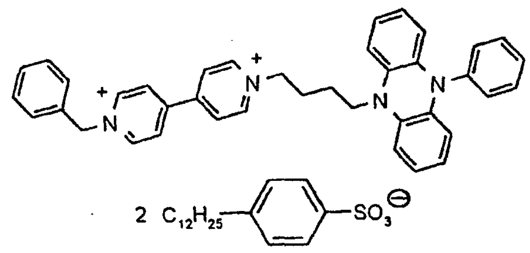 | 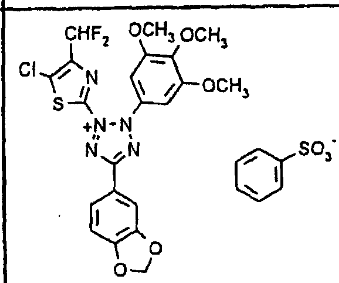 | Glutardinitril | $N(CH_3)_4^+BF_4^-$ | schwarz/ blau - orange |
| 19 | 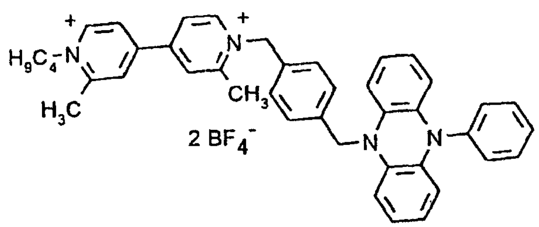 | 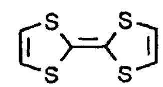 | Propylen-carbonat | - | schwarz/ blau - orange |

| Beispiel | $RED_1$-B-$OX_2$-B-$RED_1$ | $OX_2$ | Lösungsmittel | Zusätze | Farbe |
|---|---|---|---|---|---|
| 20 | 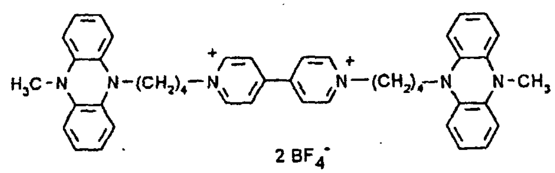 $2 BF_4^-$ | 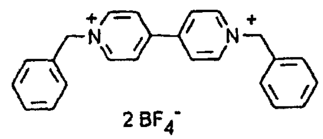 $2 BF_4^-$ | Propylen-carbonat | - | grünlich blau/ blau -gelb |

**Patentansprüche**

1. Elektrochrome Anzeigevorrichtung, bestehend aus mindestens zwei lichtdurchlässigen Trägern die über einen Abstandsring miteinander verbunden sind, und von denen mindestens eine auf der einander zugewandten Seite lichtdurchlässig elektrisch leitfähig beschichtet ist und gegebenenfalls einer der Träger verspiegelt ist, **dadurch gekennzeichnet, daß** wenigstens einer der leitfähig beschichteten Träger in voneinander elektrisch getrennte Segmente aufgeteilt ist, die einzeln kontaktierbar sind, und zwischen den Trägern enthalten ist

   a) ein Lösungsmittel,

   b) in diesem Lösungsmittel gelöst mindestens eine oxidierbare Substanz $RED_1$, die durch Elektronenabgabe an einer Anode und mindestens eine reduzierbare Substanz $OX_2$, die durch Elektronenaufnahme an einer Kathode, jeweils unter Änderung der Extinktion im sichtbaren Bereich des Spektrums in ihre jeweiligen Formen $OX_1$ bzw. $RED_2$ übergehen, wobei nach Ladungsausgleich jeweils die ursprünglichen Formen $RED_1$ und $OX_2$ zurückgebildet werden,

   c) gegebenenfalls ein Leitsalz.

2. Elektrochrome Anzeigevorrichtung gemäß Anspruch 1, **dadurch gekennzeichnet, daß** es sich bei den Trägern um Platten handelt, wobei

   aa) beide Platten leitfähig beschichtet sind, aber nur eine der beiden Platten in Segmente aufgeteilt ist, während die andere Platte keine Strukturierung besitzt, oder

   ab) beide Platten leitfähig beschichtet und in Segmente aufgeteilt sind oder

   ac) nur eine der beiden Platten leitfähig beschichtet und in Segmente aufgeteilt ist, während die andere keine leitfähige Beschichtung trägt,
   oder

   b) die Platten so strukturiert sind, daß eine multiplexe Ansteuerung möglich ist.

3. Elektrochrome Anzeigevorrichtung gemäß Ansprüchen 1 bis 2, **dadurch gekennzeichnet, daß** sie dynamisch und selbstjustierend ist, gesteuert über Drift, Diffusion und Rekombination der am Redoxprozeß beteiligten elektrochromen Substanzen $RED_1/OX_1$ und $OX_2/RED_2$.

4. Elektrochrome Anzeigevorrichtung gemäß Ansprüchen 1 bis 3, **dadurch gekennzeichnet, daß** elektrochrome Substanzen mit geringer Diffusionsgeschwindigkeit und/oder hoher Ladung pro Molekül verwendet werden.

5. Elektrochrome Anzeigevorrichtung gemäß Ansprüchen 1 bis 4, **dadurch gekennzeichnet, daß** sie solche $OX_2$ und $RED_1$ enthält, bei denen die Differenz der Ladungen der entsprechenden $OX_1$ und $RED_2$ mindestens +2 beträgt.

6. Elektrochrome Anzeigevorrichtung gemäß Ansprüchen 1 bis 5, **dadurch gekennzeichnet, daß** sie solche $OX_2$ und $RED_1$ enthält, deren entsprechende $RED_2$ und $OX_1$ beide gleichartig geladen sind.

7. Elektrochrome Anzeigevorrichtung gemäß Ansprüchen 1 bis 6, **dadurch gekennzeichnet, daß** Platten aus Kunststoff und gegebenenfalls Abstandshalter verwendet werden.

8. Elektrochrome Anzeigevorrichtung gemäß Ansprüchen 1 bis 7, **dadurch gekennzeichnet, daß** die elektrochrome Flüssigkeit mindestens einen Verdicker enthält.

9. Elektrochrome Anzeigevorrichtung gemäß Anspruch 2 bis 8, **dadurch gekennzeichnet, daß**

   a) beide Platten leitfähig beschichtet sind, aber nur eine der beiden Platten in Segmente aufgeteilt ist, während die andere Platte keine Strukturierung besitzt, oder
   b) beide Platten leitfähig beschichtet und in Segmente aufgeteilt sind.

10. Elektrochrome Anzeigevorrichtung gemäß Ansprüchen 1 bis 9, **dadurch gekennzeichnet, daß** sie in einem Stromspar- oder Refresh-Mode betrieben werden kann, bei dem nach Aufbau der Information durch Gleichstrom auf einen Betrieb mit in niedriger Frequenz gepulster oder sich verändernder Spannung umgeschaltet wird, wobei die kontaktierten Segmente während der Strompausen nicht kurzgeschlossen werden.

11. Elektrochrome Anzeigevorrichtung gemäß Anspruch 1 bis 10, **dadurch gekennzeichnet, daß** sie als $OX_2$ Verbindungen der Formeln

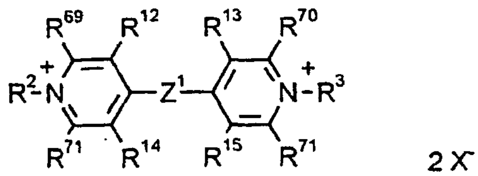

(II),

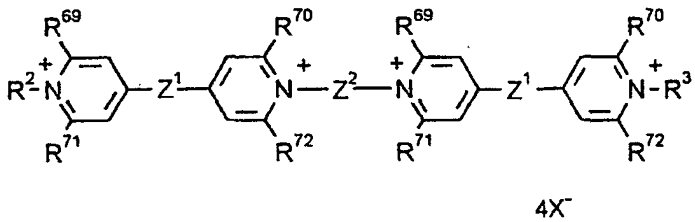

(III),

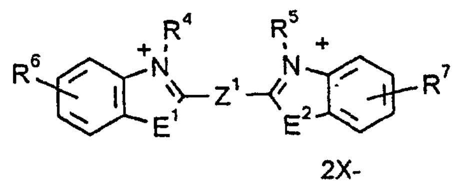

(IV),

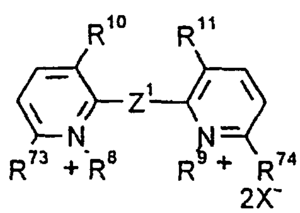

(V),

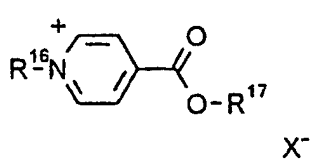

(VI),

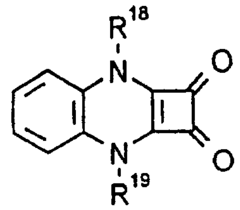

(VII),

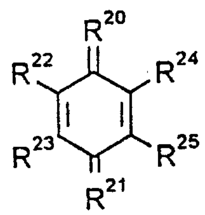

(VIII),

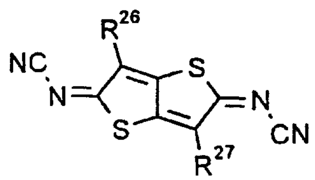

(IX),

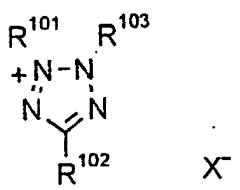

(CI)

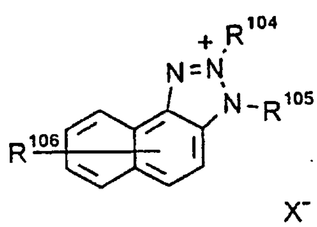

(CII),

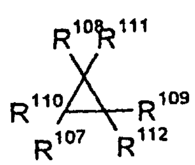

(CIII),

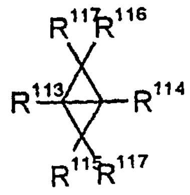

(CIV)

worin

| | |
|---|---|
| $R^2$ bis $R^5$, $R^8$, $R^9$, $R^{16}$ bis $R^{19}$ | unabhängig voneinander $C_1$- bis $C_{18}$-Alkyl, $C_2$- bis $C_{12}$-Alkenyl, $C_4$- bis $C_7$-Cycloalkyl, $C_7$- bis $C_{15}$-Aralkyl oder $C_6$- bis $C_{10}$-Aryl bedeuten oder |
| $R^4$; $R^5$ bzw. $R^8$; $R^9$ | gemeinsam eine $-(CH_2)_2$- oder $-(CH_2)_3$-Brücke bilden können, |
| $R^6$, $R^7$ und $R^{22}$ bis $R^{25}$ | unabhängig voneinander Wasserstoff, $C_1$- bis $C_4$-Alkyl, $C_1$- bis $C_4$-Alkoxy, Halogen, Cyan, Nitro oder $C_1$- bis $C_4$-Alkoxycarbonyl bedeuten oder |
| $R^{22}$; $R^{23}$ und/oder $R^{24}$; $R^{25}$ | eine -CH=CH-CH=CH-Brücke bilden können, |
| $R^{10}$; $R^{11}$, $R^{12}$; $R^{13}$ und $R^{14}$; $R^{15}$ | unabhängig voneinander Wasserstoff oder paarweise eine $-(CH_2)_2$-, $-(CH_2)_3$- oder -CH=CH-Brücke bedeuten, |
| $R^{20}$ und $R^{21}$ | unabhängig voneinander O, N-CN, $C(CN)_2$ oder N-$C_6$- bis $C_{10}$-Aryl bedeuten, |
| $R^{26}$ und $R^{27}$ | Wasserstoff, $C_1$- bis $C_4$-Alkyl, $C_1$- bis $C_4$-Alkoxy, Halogen, Cyan, Nitro, $C_1$- bis $C_4$-Alkoxycarbonyl oder $C_6$- bis $C_{10}$-Aryl bedeuten, |
| $R^{69}$ bis $R^{74}$ | unabhängig voneinander Wasserstoff oder $C_1$- bis $C_6$-Alkyl bedeuten oder |
| $R^{69}$; $R^{12}$ und/oder $R^{70}$; $R^{13}$ | gemeinsam eine -CH=CH-CH=CH-Brücke bilden, |
| $E^1$ und $E^2$ | unabhängig voneinander O, S, $NR^1$ oder $C(CH_3)_2$ bedeuten oder |
| $E^1$ und $E^2$ | gemeinsam eine $-N-(CH_2)_2-N$-Brücke bilden, |
| $R^1$ | $C_1$- bis $C_{18}$-Alkyl, $C_2$- bis $C_{12}$-Alkenyl, $C_4$- bis $C_7$-Cycloalkyl, $C_7$-bis $C_{15}$-Aralkyl, $C_6$- bis $C_{10}$-Aryl bedeutet, |
| $Z^1$ | eine direkte Bindung, -CH=CH-, $-C(CH_3)=CH-$, -C(CN)=CH-, -CCl=CCl-, -C(OH)=CH-, -CCl=CH-, $-C\equiv C-$, -CH=N-N=CH-, $-C(CH_3)=N-N=C(CH_3)-$ oder -CCl=N-N=CCl- bedeutet, |
| $Z^2$ | $-(CH_2)_r-$ oder $-CH_2-C_6H_4-CH_2-$ bedeutet, |
| r | eine ganze Zahl von 1 bis 10 bedeutet, |
| $R^{101}$ bis $R^{105}$ | unabhängig voneinander $C_6$- bis $C_{10}$-Aryl oder einen ggf. benzanellierten aromatischen oder quasiaromatischen fünf- oder sechsgliedrigen heterocyclischen Ring bedeuten, |
| $R^{107}$, $R^{109}$, $R^{113}$ und $R^{114}$ | unabhängig voneinander einen Rest der Formeln (CV) bis (CVII) |

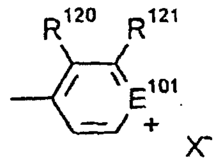

(CV),

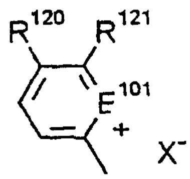

(CVI),

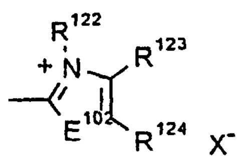

(CVII)

bedeuten,

| | |
|---|---|
| $R^{108}$, $R^{115}$ und $R^{116}$ | unabhängig voneinander $C_6$- bis $C_{10}$-Aryl oder einen Rest der Formel (CV) bedeuten, |
| $R^{110}$ bis $R^{112}$, $R^{117}$ und $R^{118}$ | unabhängig voneinander Wasserstoff, $C_1$- bis $C_4$-Alkyl, Halogen oder Cyano bedeuten, |
| $E^{101}$ und $E^{102}$ | unabhängig voneinander O, S oder N-$R^{119}$ bedeuten, |
| $R^{119}$ und $R^{122}$ | unabhängig voneinander $C_1$- bis $C_{18}$-Alkyl, $C_2$- bis $C_8$-Alkenyl, $C_4$- bis $C_7$-Cycloalkyl, $C_7$- bis $C_{15}$-Aralkyl oder $C_6$- bis $C_{10}$-Aryl bedeuten, |
| $R^{106}$, $R^{120}$, $R^{121}$, $R^{123}$ und $R^{124}$ | unabhängig voneinander Wasserstoff, $C_1$-bis $C_4$-Alkyl, $C_1$- bis $C_4$-Alkoxy, Halogen, Cyano, Nitro oder $C_1$-bis $C_4$-Alkoxycarbonyl bedeuten oder |
| $R^{120}$, $R^{121}$ bzw. $R^{123}$, $R^{124}$ | gemeinsam eine -CH=CH-CH=CH-Brücke bilden und |
| $X^-$ | ein unter den Bedingungen redox-inertes Anion bedeutet, |

oder Metallsalze oder Metallkomplexe, vorzugsweise von solchen Metallionen, deren Oxidationsstufen sch um 1 unterscheiden,
und als $RED_1$ Verbindungen der Formeln

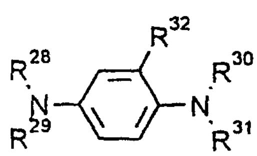

(X),

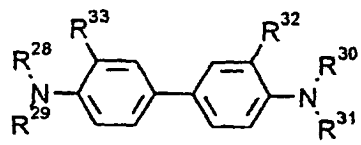

(XI),

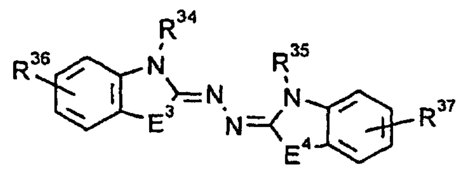

(XII),

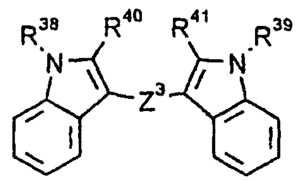

(XIII),

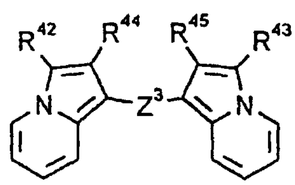

(XIV),

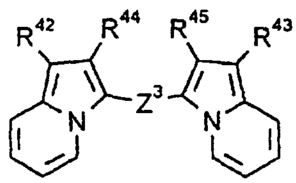

(XV),

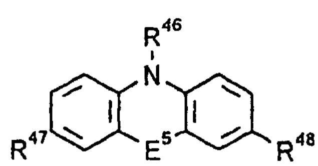

(XVI),

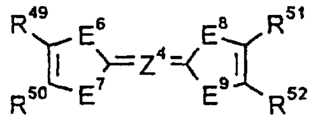

(XVII),

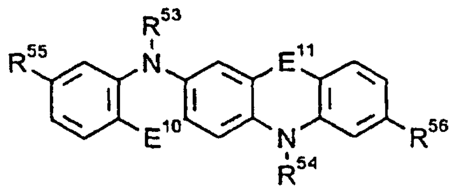

(XVIII),

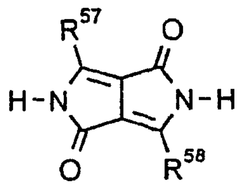

(XIX),

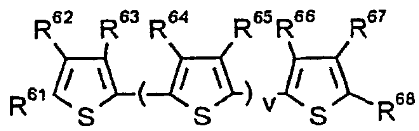

(XX),

worin

| | |
|---|---|
| $R^{28}$ bis $R^{31}$, $R^{34}$, $R^{35}$, $R^{38}$, $R^{39}$, $R^{46}$, $R^{53}$ und $R^{54}$ | unabhängig voneinander $C_1$- bis $C_{18}$-Alkyl, $C_2$- bis $C_{12}$-Alkenyl, $C_4$- bis $C_7$-Cycloalkyl, $C_7$-bis $C_{15}$-Aralkyl oder $C_6$- bis $C_{10}$-Aryl bedeuten, |
| $R^{32}$, $R^{33}$, $R^{36}$, $R^{37}$, $R^{40}$, $R^{41}$, $R^{42}$ bis $R^{45}$, $R^{47}$, $R^{48}$, $R^{49}$ bis $R^{52}$ und $R^{55}$ bis $R^{58}$ | unabhängig voneinander Wasserstoff, $C_1$- bis $C_4$-Alkyl, $C_1$- bis $C_4$-Alkoxy, Halogen, Cyan, Nitro, $C_1$- bis $C_4$-Alkoxycarbonyl, $C_6$-bis $C_{10}$-Aryl bedeuten und $R^{57}$ und $R^{58}$ zusätzlich einen aromatischen oder quasiaromatischen fünf- oder sechsgliedrigen heterocyclischen Ring, der gegebenenfalls benzanneliert ist, bedeuten und $R^{48}$ zusätzlich $NR^{75}R^{76}$ bedeutet oder |
| $R^{49}$; $R^{50}$ und/oder $R^{51}$; $R^{52}$ | eine $-(CH_2)_3-$, $-(CH_2)_4-$, $-(CH_2)_5-$ oder -CH=CH-CH=CH-Brücke bilden, |
| $Z^3$ | eine direkte Bindung, eine -CH=CH- oder -N=N-Brücke bedeutet, |
| $=Z^4=$ | eine direkte Doppelbindung, eine =CH-CH= oder =N-N=- |

Brücke bedeutet,

$E^3$ bis $E^5$, $E^{10}$ und $E^{11}$ unabhängig voneinander O, S, $NR^{59}$ oder $C(CH_3)_2$ bedeuten und $E^5$ zusätzlich C=O oder $SO_2$ bedeutet,

$E^3$ und $E^4$ unabhängig voneinander zusätzlich -CH=CH- bedeuten können,

$E^6$ bis $E^9$ unabhängig voneinander S, Se oder $NR^{59}$ bedeuten,

$R^{59}$, $R^{75}$ und $R^{76}$ unabhängig voneinander $C_1$- bis $C_{12}$-Alkyl, $C_2$- bis $C_8$-Alkenyl, $C_4$- bis $C_7$-Cycloalkyl, $C_7$- bis $C_{15}$-Aralkyl, $C_6$- bis $C_{10}$-Aryl bedeutet und $R^{75}$ zusätzlich Wasserstoff bedeutet, oder $R^{75}$ und $R^{76}$ in der Bedeutung von $NR^{75}R^{76}$ gemeinsam mit dem N-Atom, an das sie gebunden sind, einen fünf- oder sechsgliedrigen Ring bedeuten, der gegebenenfalls weitere Heteroatome enthält,

$R^{61}$ bis $R^{68}$ unabhängig voneinander Wasserstoff, $C_1$- bis $C_6$-Alkyl, $C_1$- bis $C_4$-Alkoxy, Cyan, $C_1$- bis $C_4$-Alkoxycarbonyl oder $C_6$- bis $C_{10}$-Aryl bedeuten und

$R^{61}$; $R^{62}$ und $R^{67}$; $R^{68}$ unabhängig voneinander zusätzlich eine $-(CH_2)_3-$, $-(CH_2)_4-$ oder -CH=CH-CH=CH-Brücke bilden, und

v eine ganze Zahl zwischen 0 und 10 bedeutet,

oder Metallsalze oder Metallkomplexe, vorzugsweise von solchen Metallionen, deren Oxidationsstufen sich um 1 unterscheiden, enthält.

**12.** Elektrochrome Anzeigevorrichtung gemäß Anspruch 1 bis 11, **dadurch gekennzeichnet, daß** sie eine elektrochrome Substanz der Formel

$$Y\text{-}[\text{-}(\text{-}B\text{-}Z\text{-})_a\text{-}(\text{-}B\text{-}Y\text{-})_b\text{-}]_c\text{-}B\text{-}Z \qquad (I),$$

worin

Y und Z unabhängig voneinander für einen Rest $OX_2$ oder $RED_1$ stehen, wobei aber mindestens ein Y für $OX_2$ und mindestens ein Z für $RED_1$ steht, wobei

$OX_2$ für den Rest eines reversibel elektrochemisch reduzierbaren Redoxsystems steht, und

$RED_1$ für den Rest eines reversibel elektrochemisch oxidierbaren Redoxsystems steht,

B für ein Brückenglied steht,

c für eine ganze Zahl von 0 bis 5 steht, und

a und b unabhängig voneinander für eine ganze Zahl von 0 bis 5 stehen,

enthält.

**13.** Elektrochrome Anzeigevorrichtung gemäß Anspruch 1 bis 12, **dadurch gekennzeichnet, daß** sie eine elektrochrome Substanz der Formeln

$$OX_2\text{-B-}RED_1 \quad \text{(Ia)},$$

$$OX_2\text{-B-}RED_1\text{-B-}OX_2 \quad \text{(Ib)},$$

$$RED_1\text{-B-}OX_2\text{-B-}RED_1 \quad \text{(Ic)},$$

oder

$$OX_2\text{-(B-}RED_1\text{-B-}OX_2)_d\text{-B-}RED_1 \quad \text{(Id)}$$

worin

$OX_2$, $RED_1$ und B die oben angegebene Bedeutung haben und

d für eine ganze Zahl von 1 bis 5 steht,

enthält.

**14.** Elektrochrome Anzeigevorrichtung gemäß Ansprüchen 1 bis 13, **dadurch gekennzeichnet, daß** $OX_2$ und $RED_1$ insbesondere Reste der oben beschriebenen Redoxsysteme der Formeln (II) bis (IX), (CI) bis CIV) und (X) bis (XX) bedeuten, wobei die Bindung zum Brückenglied B über einen der Reste $R^2$ bis $R^{19}$, $R^{22}$ bis $R^{27}$, $R^{28}$ bis $R^{58}$, $R^{61}$, $R^{62}$, $R^{67}$, $R^{68}$, $R^{122}$ oder im Falle, daß einer der Reste $E^1$ oder $E^2$ für $NR^1$ oder einer der Reste $E^3$ bis $E^{11}$ für $NR^{59}$ oder einer der Reste $E^{101}$ bis $E^{102}$ für $NR^{119}$ steht, über $R^1$, $R^{59}$ bzw. $R^{119}$ erfolgt und die genannten Reste dann für eine direkte Bindung stehen, und

B für eine Brücke der Formeln $-(CH_2)_n-$ oder $-[Y^1{}_s(CH_2)_m-Y^2]_o-(CH_2)_p-Y^3{}_q-$ steht, die durch $C_1$- bis $C_4$-Alkyl, $C_1$- bis $C_4$-Alkoxy, Halogen oder Phenyl substituiert sein kann,

$Y^1$ bis $Y^3$ unabhängig voneinander für O, S, $NR^{60}$, COO, CONH, NHCONH, Cyclopentandiyl, Cyclohexandiyl, Phenylen oder Naphthylen stehen,

$R^{60}$ $C_1$- bis $C_6$-Alkyl, $C_2$- bis $C_6$-Alkenyl, $C_4$- bis $C_7$-Cycloalkyl, $C_7$-bis $C_{15}$-Aralkyl oder $C_6$- bis $C_{10}$-Aryl bedeutet,

n eine ganze Zahl von 1 bis 12 bedeutet,

m und p unabhängig voneinander eine ganze Zahl von 0 bis 8 bedeuten,

o eine ganze Zahl von 0 bis 6 bedeutet und

q und s unabhängig voneinander 0 oder 1 bedeuten.

**15.** Verwendung der elektrochromen Substanzen, wie sie in Anspruch 11 bis 14 genannt sind, in einer elektrochromen Anzeigevorrichtung, gemäß Anspruch 1.

**Claims**

**1.** Electrochromic display device comprising at least two transparent substrates which are joined to one another via a spacer ring and of which at least one has an electrically conductive, transparent coating on the side facing the other and one of the substrates may be mirrored, **characterized in that** at least one of the substrates having a conductive coating is subdivided into segments which are electrically separated from one another and can be contacted singly, and there is contained, between the substrates,

a) a solvent,

b) dissolved in this solvent at least one oxidizable substance $RED_1$ which, by releasing electrons at an anode, is converted into its respective form $OX_1$ with a change in absorbance in the visible region of the spectrum, and at least one reducible substance $OX_2$ which by accepting electrons at a cathode, is converted into its respective form $RED_2$ with a change in absorbance in the visible region of the spectrum, the original forms $RED_1$ and $OX_2$ each being recovered after charge equalization,

c) optionally a conductive salt.

**2.** Electrochromic display device according to Claim 1, **characterized in that** the substrates are plates,

aa) both plates having a conductive coating, but only one of the two plates being subdivided into segments, whereas the other plate is not patterned, or

ab) both plates having conductive coatings and being subdivided into segments or

ac) only one of the two plates having a conductive coating and being subdivided into segments, whereas the other one does not have a conductive coating,
or

b) the plates being patterned in such a way that multiplexed driving is possible.

**3.** Electrochromic display device according to Claims 1 and 2, **characterized in that** it is dynamic and self-aligning, controlled via drift, diffusion and recombination of the electrochromic substances $RED_1/OX_1$ and $OX_2/RED_2$ involved in the redox process.

**4.** Electrochromic display device according to Claims 1 to 3, **characterized in that** electrochromic substances having a low diffusion rate and/or high charge per molecule are employed.

**5.** Electrochromic display device according to Claims 1 to 4, **characterized in that** it comprises $OX_2$ and $RED_1$ in which the difference in the charges of the corresponding $OX_1$ and $RED_2$ is at least +2.

**6.** Electrochromic display device according to Claims 1 to 5, **characterized in that** it comprises $OX_2$ and $RED_1$ whose corresponding $RED_2$ and $OX_1$ both have the same type of charge.

**7.** Electrochromic display device according to Claims 1 to 6, **characterized in that** use is made of plates made of plastic and optional use is made of spacers.

**8.** Electrochromic display device according to Claims 1 to 7, **characterized in that** the electrochromic fluid comprises at least one thickener.

**9.** Electrochromic display device according to Claims 1 to 8, **characterized in that**

a) both plates have a conductive coating, but only one of the two plates is subdivided into segments, whereas the other plate is not patterned, or

b) both plates have conductive coatings and are subdivided into segments.

**10.** Electrochromic display device according to Claims 1 to 9, **characterized in that** it can be operated in an energy saving mode or a refresh mode which, after the information has been built up by direct current, involves switching over to operation with the voltage which is pulsed at low frequency or varies, the contacted segments not being shortcircuited during the currentless intervals.

**11.** Electrochromic display device according to Claims 1 to 10, **characterized in that** it comprises, as $OX_2$, compounds of the formulae

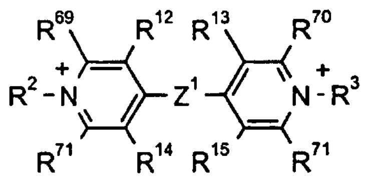

$2X^-$

(II),

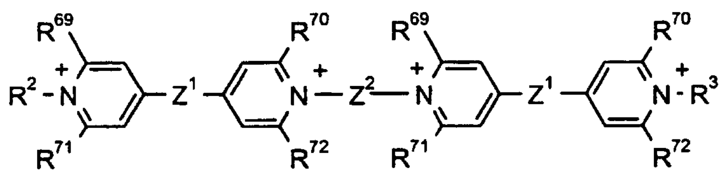

$4X^-$

(III),

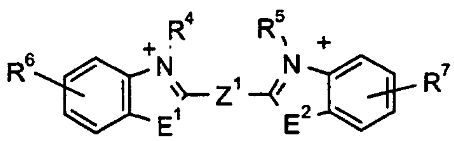

2X-

(IV),

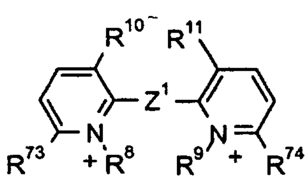

$2X^-$

(V),

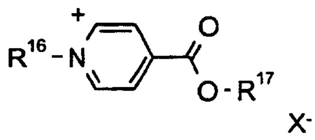

(VI),

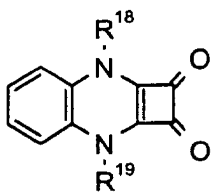

(VII),

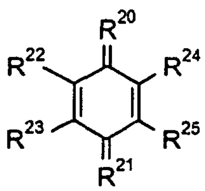

(VIII),

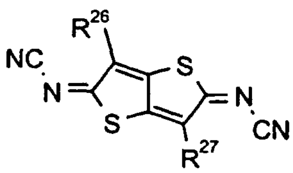

(IX),

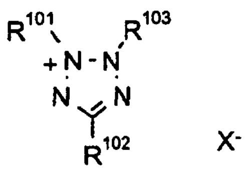

(CI)

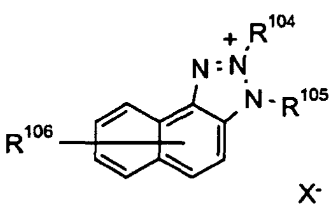

(CII),

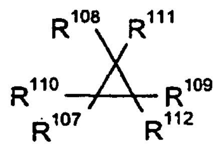

(CIII),

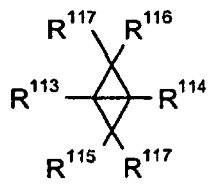

(CIV)

in which

| | |
|---|---|
| $R^2$ to $R^5$, $R^8$, $R^9$, $R^{16}$ to $R^{19}$, | independently of one another, represent $C_1$- to $C_{18}$-alkyl, $C_2$- to $C_{12}$-alkenyl, $C_4$- to $C_7$-cycloalkyl, $C_7$- to $C_{15}$-aralkyl or $C_6$- to $C_{10}$-aryl or |
| $R^4$; $R^5$ or $R^8$; $R^9$ | may jointly form a $-(CH_2)_2-$ or $-(CH_2)_3-$ bridge, |
| $R^6$, $R^7$ and $R^{22}$ to $R^{25}$, | independently of one another, represent hydrogen, $C_1$- to $C_4$-alkyl, $C_1$- to $C_4$-alkoxy, halogeno, cyano, nitro or $C_1$- to $C_4$-alkoxycarbonyl or |
| $R^{22}$; $R^{23}$ and/or $R^{24}$; $R^{25}$ | may form a -CH=CH-CH=CH- bridge, |
| $R^{10}$; $R^{11}$, $R^{12}$; $R^{13}$ and $R^{14}$; $R^{15}$, | independently of one another, represent hydrogen or pairwise represent a $-(CH_2)_2-$, $-(CH_2)_3-$ or -CH=CH- bridge, |
| $R^{20}$ and $R^{21}$, | independently of one another, represent O, N-CN, $C(CN)_2$ or N-$C_6$- to -$C_{10}$-aryl, |
| $R^{26}$ and $R^{27}$ | represent hydrogen, $C_1$- to $C_4$-alkyl, $C_1$-to $C_4$-alkoxy, halogeno, cyano, nitro, $C_1$- to $C_4$-alkoxycarbonyl or $C_6$- to $C_{10}$-aryl, |
| $R^{69}$ to $R^{74}$, | independently of one another, represent hydrogen or $C_1$- to $C_6$-alkyl or |
| $R^{69}$; $R^{12}$ and/or $R^{70}$; $R^{13}$ | jointly form a -CH=CH-CH=CH- bridge, |
| $E^1$ and $E^2$, | independently of one another, represent O, S, $NR^1$ or $C(CH_3)_2$ or |
| $E^1$ and $E^2$ | jointly form an $-N-(CH_2)_2-N-$ bridge, |
| $R^1$ | represents $C_1$- to $C_{18}$-alkyl, $C_2$- to $C_{12}$-alkenyl, $C_4$- to $C_7$-cycloalkyl, $C_7$- to $C_{15}$-aralkyl, $C_6$- to $C_{10}$-aryl, |
| $Z^1$ | represents a direct bond, -CH=CH-, $-C(CH_3)=CH-$, -C(CN)=CH-, -CCl=CCl-, -C(OH)=CH-, -CCl=CH-, -C≡C-, -CH=N-N=CH-, $-C(CH_3)=N-N=C(CH_3)-$ or -CCl=N-N=CCl-, |
| $Z^2$ | represents $-(CH_2)_r-$ or $-CH_2-C_6H_4-CH_2-$, |
| r | represents an integer from 1 to 10, |
| $R^{101}$ to $R^{105}$, | independently of one another, represent $C_6$- to $C_{10}$-aryl or an aromatic or qua- |

si-aromatic five- or six-membered heterocyclic ring each of which is optionally benzanellated,

$R^{107}$, $R^{109}$, $R^{113}$ and $R^{114}$, independently of one another, represent a radical of the formulae (CV) to (CVII)

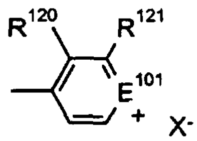

(CV),

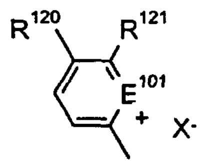

(CVI),

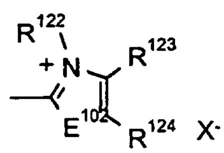

(CVII)

$R^{108}$, $R^{115}$ and $R^{116}$, independently of one another, represent $C_6$- to $C_{10}$-aryl or a radical of the formula (CV),

$R^{110}$ to $R^{112}$, $R^{117}$ and $R^{118}$, independently of one another, represent hydrogen, $C_1$- to $C_4$-alkyl, halogeno or cyano,

$E^{101}$ and $E^{102}$, independently of one another, represent O, S or N-$R^{119}$,

$R^{119}$ and $R^{122}$, independently of one another, represent $C_1$- to $C_{18}$-alkyl, $C_2$- to $C_8$-alkenyl, $C_4$- to $C_7$-cycloalkyl, $C_7$- to $C_{15}$-aralkyl or $C_6$-to $C_{10}$-aryl,

$R^{106}$, $R^{120}$, $R^{121}$, $R^{123}$ and $R^{124}$, independently of one another, represent hydrogen, $C_1$- to $C_4$-alkyl, $C_1$- to $C_4$-alkoxy, halogeno, cyano, nitro or $C_1$- to $C_4$-alkoxycarbonyl or

$R^{120}$, $R^{121}$ or $R^{123}$, $R^{124}$ jointly form a -CH=CH-CH=CH- bridge and

$X^-$ represents an anion which is redox-inert under the conditions,

or metal salts or metal complexes, preferably of metal ions whose oxidation states differ by 1, and, as $RED_1$, compounds of the formulae

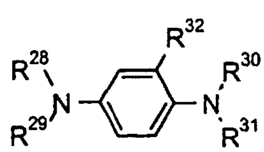

(X),

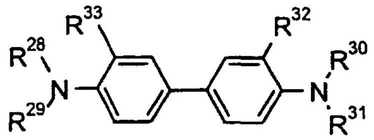

(XI),

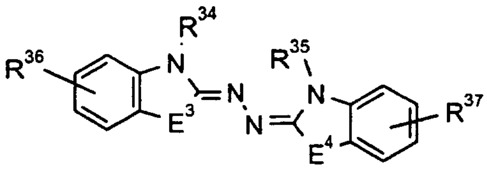

(XII),

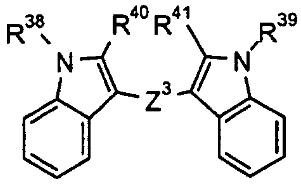

(XIII),

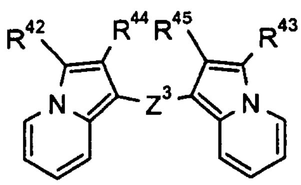

(XIV),

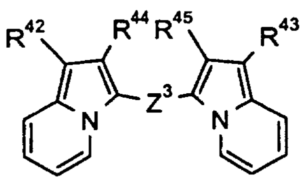

(XV),

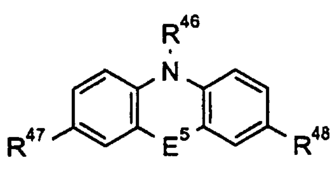

(XVI),

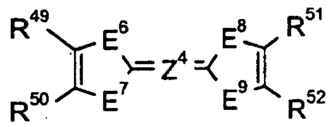

(XVII),

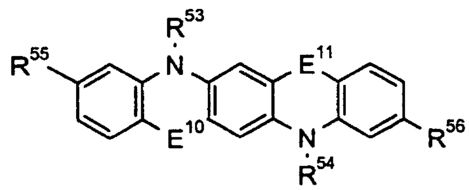

(XVIII),

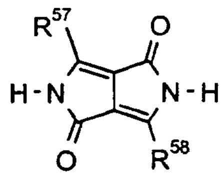

(XIX),

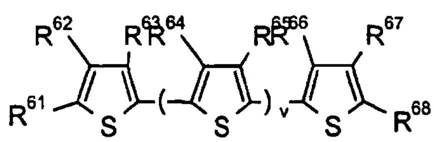

(XX),

in which

$R^{28}$ to $R^{31}$, $R^{34}$, $R^{35}$, $R^{38}$, $R^{39}$, $R^{46}$, $R^{53}$ and $R^{54}$, independently of one another, represent $C_1$- to $C_{18}$-alkyl, $C_2$- to $C_{12}$-alkenyl, $C_4$- to $C_7$-cycloalkyl, $C_7$- to $C_{15}$-aralkyl or $C_6$- to $C_{10}$-aryl,

$R^{32}$, $R^{33}$, $R^{36}$, $R^{37}$, $R^{40}$, $R^{41}$, $R^{42}$ to $R^{45}$, $R^{47}$, $R^{48}$, $R^{49}$ to $R^{52}$ and $R^{55}$ to $R^{58}$, independently of one another, represent hydrogen, $C_1$- to $C_4$-alkyl, $C_1$- to $C_4$-alkoxy, halogeno, cyano, nitro, $C_1$-to $C_4$-alkoxycarbonyl, $C_6$- to $C_{10}$-aryl, and $R^{57}$ and $R^{58}$ each additionally represent an aromatic or quasi-aromatic five- or six-membered heterocyclic ring which is optionally benzanellated, and $R^{48}$ additionally represents $NR^{75}R^{76}$ or

$R^{49}$; $R^{50}$ and/or $R^{51}$; $R^{52}$ form a $-(CH_2)_3-$, $-(CH_2)_4-$, $-(CH_2)_5-$ or -CH=CH-CH=CH-

bridge,

| | |
|---|---|
| $Z^3$ | represents a direct bond, a -CH=CH- or -N=N- bridge, |
| $=Z^4=$ | represents a direct double bond, a =CH-CH= or =N-N= bridge, |
| $E^3$ to $E^5$, $E^{10}$ and $E^{11}$, | independently of one another, represent O, S, $NR^{59}$ or $C(CH_3)_2$ and $E^5$ additionally represents C=O or $SO_2$, |
| $E^3$ and $E^4$, | independently of one another, additionally may represent -CH=CH-, |
| $E^6$ to $E^9$, | independently of one another, represent S, Se or $NR^{59}$, |
| $R^{59}$, $R^{75}$ and $R^{76}$, | independently of one another represent $C_1$- to $C_{12}$-alkyl, $C_2$- to $C_8$-alkenyl, $C_4$- to $C_7$-cycloalkyl, $C_7$- to $C_{15}$-aralkyl, $C_6$-to $C_{10}$-aryl, and $R^{75}$ additionally represents hydrogen, |
| or $R^{75}$ and $R^{76}$, as $NR^{75}R^{76}$, | represent, together with the nitrogen atom to which they are bonded, a five- or six-membered ring which may comprise further heteroatoms, |
| $R^{61}$ to $R^{68}$, | independently of one another, represent hydrogen, $C_1$- to $C_6$-alkyl, $C_1$- to $C_4$-alkoxy, cyano, $C_1$- to $C_4$-alkoxycarbonyl or $C_6$- to $C_{10}$-aryl and |
| $R^{61}$; $R^{62}$ and $R^{67}$; $R^{68}$, | independently of one another, additionally form a $-(CH_2)_3-$, $-(CH_2)_4-$ or -CH=CH-CH=CH- bridge, and |
| v | represents an integer from 0 to 10, |

or metal salts or metal complexes, preferably of metal ions whose oxidation states differ by 1.

**12.** Electrochromic display device according to Claims 1 to 11, **characterized in that** it comprises an electrochromic substance of the formula

$$Y\text{-}[\text{-}(\text{-}B\text{-}Z\text{-})_a\text{-}(\text{-}B\text{-}Y\text{-})_b\text{-}]_c\text{-}B\text{-}Z \qquad (I)$$

in which

Y and Z, independently of one another, represent a radical $OX_2$ or $RED_1$, at least one Y representing $OX_2$, and at least one Z representing $RED_1$, however,
where

$OX_2$ represents the radical of an electrochemically reversibly reducible redox system, and

$RED_1$ represents the radical of an electrochemically reversibly oxidizable redox system,

B represents a bridge member,

c represents an integer from 0 to 5, and

a and b, independently of one another, represent an integer from 0 to 5.

**13.** Electrochromic display device according to Claims 1 to 12, **characterized in that** it comprises an electrochromic substance of the formulae

$$OX_2\text{-B-}RED_1 \quad \text{(Ia)},$$

$$OX_2\text{-B-}RED_1\text{-B-}OX_2 \quad \text{(Ib)},$$

$$RED_1\text{-B-}OX_2\text{-B-}RED_1 \quad \text{(Ic)},$$

or

$$OX_2\text{- (B-}RED_1\text{-B-}OX_2)_d\text{-B-}RED_1 \quad \text{(Id)}$$

in which

$OX_2$, $RED_1$ and B have the abovementioned meanings and
d represents an integer from 1 to 5.

**14.** Electrochromic display device according to Claims 1 to 13, **characterized in that** $OX_2$ and $RED_1$ represent, in particular, radicals of the above-described redox systems of the formulae (II) to (IX), (CI) to (CIV) and (X) to (XX), where the bond to the bridge member B is effected via one of the radicals $R^2$ to $R^{19}$, $R^{22}$ to $R^{27}$, $R^{28}$ to $R^{58}$, $R^{61}$, $R^{62}$, $R^{67}$, $R^{68}$, $R^{122}$ or, in the case that one of the radicals $E^1$ or $E^2$ represents $NR^1$, or one of the radicals $E^3$ to $E^{11}$ represents $NR^{59}$, or one of the radicals $E^{101}$ to $E^{102}$ represents $NR^{119}$ is effected via $R^1$, $R^{59}$ or $R^{119}$ and said radicals then represent a direct bond, and

B represents a bridge of the formulae $-(CH_2)_n-$ or $-[Y^1{}_s(CH_2)_m-Y^2]_o-(CH_2)_p-Y^3{}_q-$, which may be substituted by $C_1$- to $C_4$-alkyl, $C_1$- to $C_4$-alkoxy, halogeno or phenyl,

$Y^1$ to $Y^3$, independently of one another, represent O, S, $NR^{60}$, COO, CONH, NHCONH, cyclopentanediyl, cyclohexanediyl, phenylene or naphthylene,

$R^{60}$ represents $C_1$- to $C_6$-alkyl, $C_2$- to $C_6$-alkenyl, $C_4$- to $C_7$-cycloalkyl, $C_7$- to $C_{15}$-aralkyl or $C_6$- to $C_{10}$-aryl,

n represents an integer from 1 to 12,

m and p, independently of one another, represent an integer from 0 to 8,

o represents an integer from 0 to 6 and

q and s, independently of one another, represent 0 or 1.

**15.** Use of the electrochromic substances as mentioned in Claims 11 to 14 in an electrochromic display device according to Claim 1.

## Revendications

**1.** Dispositif d'affichage électrochrome comprenant au moins deux supports transparents qui sont reliés l'un avec l'autre via un anneau d'espacement, et dont au moins un présente un revêtement transparent, conducteur de l'électricité sur un côté faisant face à l'autre et éventuellement un des supports est métallisé, **caractérisé en ce qu'**au moins un des supports ayant un revêtement conducteur est subdivisé en segments qui sont séparés électriquement les uns des autres et peuvent être en contact uniquement, et entre les supports est contenu,

a) un solvant,
b) dissoutes dans le solvant au moins une substance $RED_1$ oxydable qui, en libérant des électrons à une anode, et au moins une substance réductible $OX_2$, qui en acceptant des électrons à une cathode, sont converties chacune en leurs forme $OX_1$ respectivement $RED_2$, avec un changement de l'extinction dans la région du visible du spectre, les formes d'origine $RED_1$ et $OX_2$ étant chacune reformées après égalisation des charges,
c) éventuellement un sel conducteur.

**2.** Dispositif d'affichage électrochrome selon la revendication 1, **caractérisé en ce que** les supports sont des plaques,

aa) les deux plaques ayant un revêtement conducteur, mais seulement une des deux plaques étant subdivisée en segments, tandis que l'autre plaque ne comporte pas de motif, ou
ab) les deux plaques ayant des revêtements conducteurs et étant subdivisées en segments ou
ac) seulement une des deux plaques ayant un revêtement conducteur et étant subdivisée en segments, tandis que l'autre ne présente pas de revêtement conducteur,
ou
b) les plaques comportant des motifs d'une manière telle que le contrôle multiplexé soit possible.

**3.** Dispositif d'affichage électrochrome selon les revendications 1 et 2, **caractérisé en ce qu'**il est dynamique et autojustifié, contrôlé via la dérive, la diffusion et la recombinaison des substances $RED_1/OX_1$ et $OX_2/RED_2$ impliquées dans le procédé redox.

**4.** Dispositif d'affichage électrochrome selon les revendications 1 à 3, **caractérisé en ce qu'**on emploie des substances électrochromes ayant une faible vitesse de diffusion et/ou une charge élevée par molécule.

**5.** Dispositif d'affichage électrochrome selon les revendications 1 à 4, **caractérisé en ce qu'**il contient $OX_2$ et $RED_1$ dans lesquels la différence dans les charges des $OX_1$ et $RED_2$ correspondants est au moins +2.

**6.** Dispositif d'affichage électrochrome selon les revendications 1 à 5, **caractérisé en ce qu'**il contient $OX_2$ et $RED_1$ dont les $RED_2$ et $OX_1$ correspondants ont tous deux le même type de charge.

**7.** Dispositif d'affichage électrochrome selon les revendications 1 à 6, **caractérisé en ce qu'**on utilise des plaques de plastique et éventuellement des espaceurs.

**8.** Dispositif d'affichage électrochrome selon les revendications 1 à 7, **caractérisé en ce que** le fluide électrochrome comprend au moins un épaississant.

**9.** Dispositif d'affichage électrochrome selon les revendications 1 à 8, **caractérisé en ce que**

a) des deux plaques ont un revêtement conducteur, mais seulement une des deux plaques est subdivisée en segments, tandis que l'autre plaque ne comporte pas de motifs, ou
b) les deux plaques ont des revêtements conducteurs et sont subdivisées en segments.

**10.** Dispositif d'affichage électrochrome selon les revendications 1 à 9, **caractérisé en ce qu'**il peut être actionné

dans un mode d'économie d'énergie ou un mode de régénération qui, après formation de l'information par courant direct, est commuté en fonctionnement avec la tension qui est pulsée à faible fréquence ou varie, les segments contactés n'étant pas court-circuités pendant des intervalles sans courant.

**11.** Dispositif d'affichage électrochrome selon les revendications 1 à 10, **caractérisé en ce qu'**il contient comme $OX_2$, des composés de formules

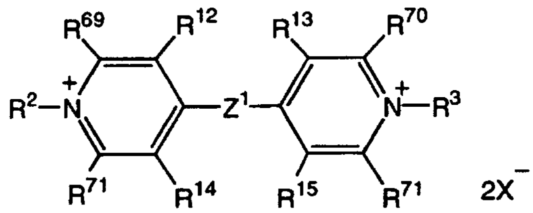

(II),

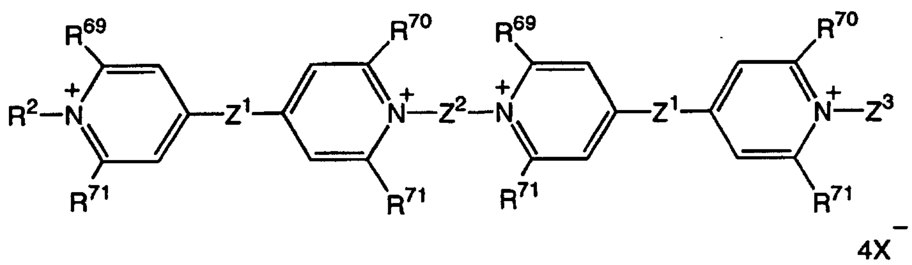

(III),

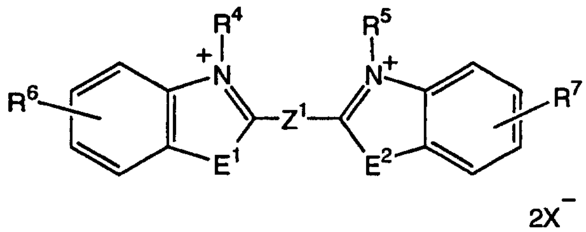

(IV),

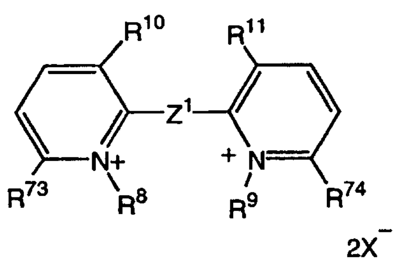

(V),

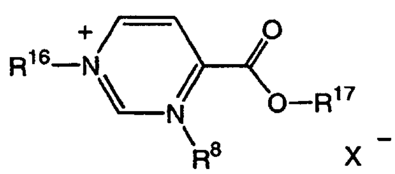

(VI),

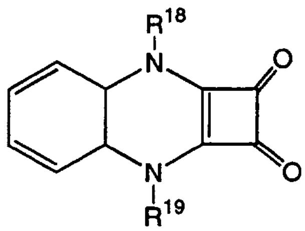

(VII),

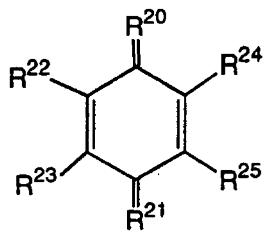

(VIII),

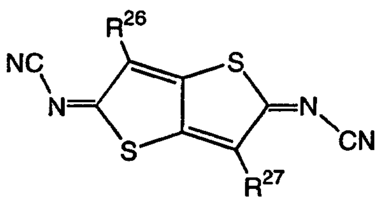

(IX),

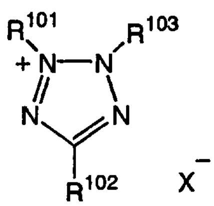

(CI),

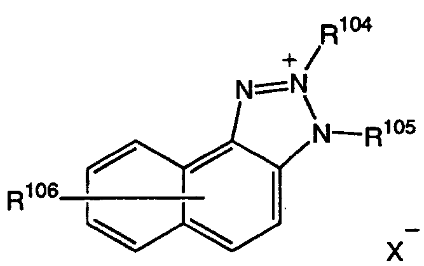

(CII),

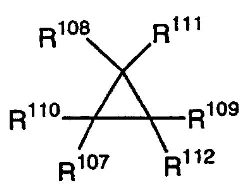

(CIII),

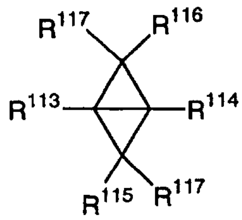

(CIV)

dans lesquelles

$R^2$ à $R^5$, $R^8$, $R^9$, $R^{16}$ à $R^{19}$ indépendamment les uns des autres signifient un groupe alkyle en $C_1$ à $C_{18}$, alcényle en $C_2$ à $C_{12}$, cycloalkyle en $C_4$ à $C_7$, aralkyle en $C_7$ à $C_{15}$ ou aryle en $C_6$ à $C_{10}$ ou

$R^4$, $R^5$ respectivement $R^8$, $R^9$ peuvent former ensemble un pont $-(CH_2)_2-$ ou $-(CH_2)_3-$,

$R^6$, $R^7$ et $R^{22}$ à $R^{25}$ indépendamment les uns des autres signifient l'hydrogène, un groupe alkyle en $C_1$ à $C_4$, alcoxy en $C_1$ à $C_4$, halogéno, cyano, nitro ou alcoxycarbonyle en $C_1$ à $C_4$,

$R^{22}$; $R^{23}$ et/ou $R^{24}$; $R^{25}$ peuvent former un pont -CH=CH-CH=CH-,

$R^{10}$; $R^{11}$, $R^{12}$; $R^{13}$ et $R^{14}$; $R^{15}$ indépendamment les uns des autres signifient l'hydrogène ou par paires un pont $-(CH_2)_2-$, $-(CH_2)_3-$ ou -CH=CH-,

$R^{20}$ et $R^{21}$ indépendamment l'un de l'autre signifient O, N-CN, $C(CN)_2$ ou N-aryle en $C_6$ à $C_{10}$,

$R^{26}$ et $R^{27}$ signifient l'hydrogène, un groupe alkyle en $C_1$ à $C_4$, alcoxy en $C_1$ à $C_4$, halogéno, cyano, nitro, alcoxycarbonyle en $C_1$ à $C_4$, ou aryle en $C_6$ à $C_{10}$,

$R^{69}$ à $R^{74}$ signifient indépendamment les uns des autres l'hydrogène ou un groupe alkyle en $C_1$ à $C_6$,

$R^{69}$; $R^{12}$ et/ou $R^{70}$; $R^{13}$ forment ensemble un pont -CH=CH-CH=CH-,

$E^1$ et $E^2$ indépendamment l'un de l'autre signifient O, S, $NR^1$ ou $C(CH_3)_2$ ou $E^1$ et $E^2$ forment ensemble un pont $-N-(CH_2)_2-N-$,

$R^1$ signifie un groupe alkyle en $C_1$ à $C_{18}$, alcényle en $C_2$ à $C_{12}$, cycloalkyle en $C_4$ à $C_7$, aralkyle en $C_7$ à $C_{15}$, aryle en $C_6$ à $C_{10}$,

$Z^1$ signifie une liaison directe, -CH=CH-, $-C(CH_3)=CH-$, -C(CN)=CH-, -CCl=CCl-, -C(OH)=CH-, -CCl=CH-, $-C\equiv C-$, -CH=N-N=CH-, $-C(CH_3)=N-N=C(CH_3)-$ ou -CCl=N-N=CCl-,

$Z^3$ signifie $-(CH_3)_r-$ ou $-CH_2-C_6H_4-CH_2-$,

R est un nombre entier de 1 à 10,

$R^{101}$ à $R^{105}$ indépendamment les uns des autres signifient un groupe aryle en $C_6$ à $C_{10}$ ou un cycle hétérocyclique, éventuellement benzanellé, aromatique ou quasi-aromatique à cinq ou sept chaînons,

$R^{107}$, $R^{109}$, $R^{113}$ et $R^{114}$, indépendamment les uns des autres signifient un radical de formules (CV) à (CVII)

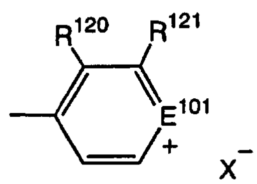

(CV),

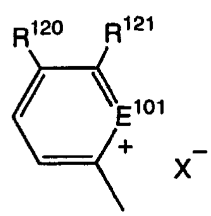

(CVI),

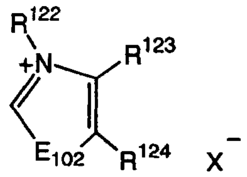

(CVII)

$R^{108}$, $R^{115}$ et $R^{116}$ indépendamment les uns des autres signifient un groupe aryle en $C_6$ à $C_{10}$ ou un radical de formule (CV),

$R^{110}$ à $R^{112}$, $R^{117}$ et $R^{118}$ indépendamment les uns des autres signifient l'hydrogène, un groupe alkyle en $C_1$ à $C_4$, un groupe halogéno ou cyano,

$E^{101}$ et $E^{102}$ indépendamment l'un de l'autre signifient O, S ou N-$R^{119}$,

$R^{119}$ et $R^{122}$ indépendamment l'un de l'autre signifient un groupe alkyle en $C_1$ à $C_{18}$, alcényle en $C_2$ à $C_8$, cycloalkyle en $C_4$ à $C_7$, aralkyle en $C_7$ à $C_{15}$ ou aryle en $C_6$ à $C_{10}$,

$R^{106}$, $R^{120}$, $R^{121}$, $R^{123}$ et $R^{124}$ indépendamment les uns des autres signifient l'hydrogène, un groupe alkyle en $C_1$ à $C_4$, alcoxy en $C_1$ à $C_4$, halogéno, cyano, nitro ou alcoxycarbonyle en $C_1$ à $C_4$ ou

$R^{120}$, $R^{121}$respectivement $R^{123}$ et $R^{124}$ ensemble forment un pont -CH=CH-CH=CH- et

$X^-$ signifie un anion inerte dans des conditions redox,

ou des sels métalliques ou des complexes métalliques, de préférence de ces ions métalliques, dont les degrés d'oxydation sont différents de 1,

et comme $RED_1$ des composés de formules

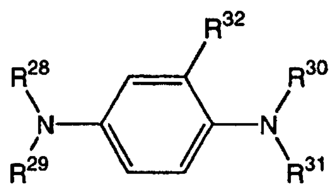

(X),

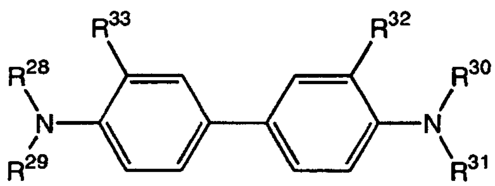

(XI),

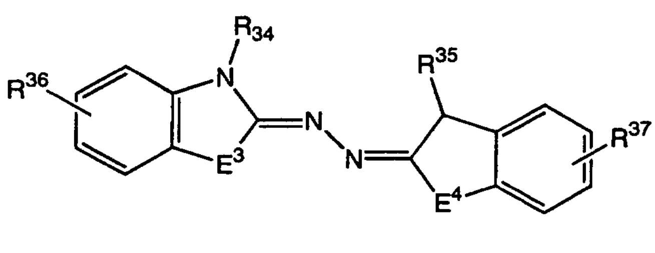

(XII),

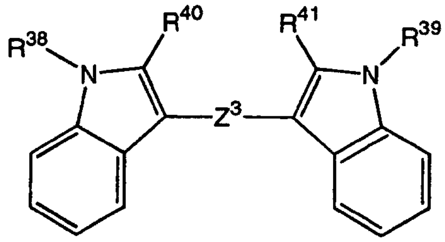

(XIII),

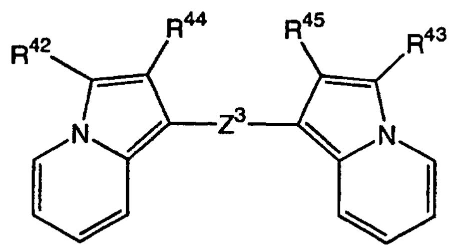

(XIV),

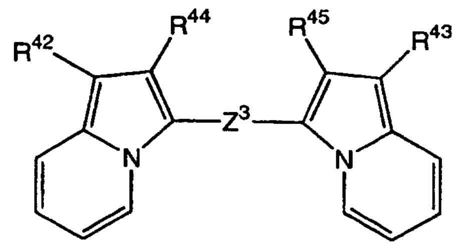

(XV),

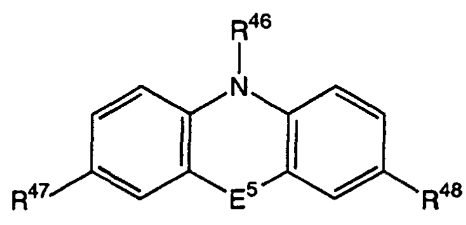

(XVI),

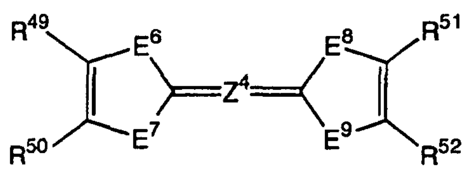

(XVII),

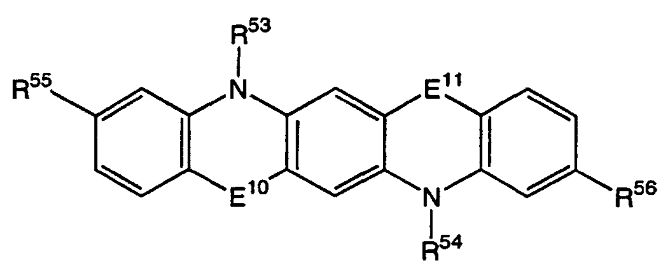

(XVIII),

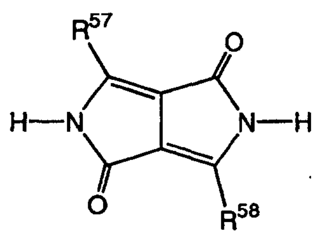

(XIX),

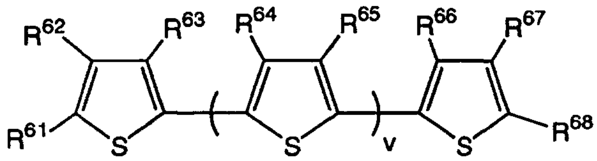

(X X),

dans lesquelles

$R^{28}$ à $R^{31}$, $R^{34}$, $R^{35}$, $R^{38}$, $R^{39}$, $R^{46}$, $R^{53}$ et $R^{54}$ signifient indépendamment les uns des autres, l'hydrogène, un groupe alkyle en $C_1$ à $C_{18}$, alcényle en $C_2$ à $C_{12}$, cycloalkyle en $C_4$ à $C_7$, aralkyle en $C_7$ à $C_{15}$ ou aryle en $C_6$ à $C_{10}$,

$R^{32}$, $R^{33}$, $R^{36}$, $R^{37}$, $R^{40}$, $R^{41}$, $R^{42}$ à $R^{45}$, $R^{48}$, $R^{49}$ à $R^{52}$ et $R^{55}$ à $R^{58}$ signifient indépendamment les uns des autres, l'hydrogène, un groupe alkyle en $C_1$ à $C_4$, alcoxy en $C_1$ à $C_4$, halogéno, cyano, nitro, alcoxycarbonyle en $C_1$ à $C_4$, aryle en $C_6$ à $C_{10}$ et $R^{57}$ et $R^{58}$ en outre signifient un cycle hétérocyclique aromatique ou quasiaromatique à cinq ou sept chaînons, qui éventuellement est benzannelé, et $R^{48}$ signifie en outre $NR^{75}R^{76}$,

$R^{49}$, $R^{50}$ et/ou $R^{51}$; $R^{52}$ forment un pont $-(CH_2)_3-$, $-(CH_2)_4-$, $-(CH_2)_5-$ ou -CH=CH-CH=CH-,

$Z^3$ signifie une liaison directe, un pont -CH=CH- ou -N=N-,

$=Z^4=$ signifie une liaison double directe, un pont =CH-CH= ou =N-N=,

$E^3$ à $E^5$, $E^{10}$ et $E^{11}$ indépendamment les uns des autres signifient O, S, $NR^{59}$ ou $C(CH_3)_2$ et $E^5$ en outre signifie C=O ou $SO_2$,

$E^3$ et $E^4$ indépendamment l'un de l'autre peuvent en outre signifier -CH=CH-,

$E^6$ et $E^9$ indépendamment l'un de l'autre signifient S, Se ou $NR^{59}$,

$R^{59}$, $R^{75}$ et $R^{76}$ indépendamment les uns des autres signifient un groupe alkyle en $C_1$ à $C_{12}$, alcényle en $C_2$ à $C_8$, cycloalkyle en $C_4$ à $C_7$, aralkyle en $C_7$ à $C_{15}$, aryle en $C_6$ à $C_{10}$ et $R^{75}$ signifie en outre l'hydrogène,

ou $R^{75}$ et $R^{76}$ dans la signification de $NR^{75}R^{76}$ représentent ensemble avec l'atome de N auquel ils sont liés, un cycle à cinq ou sept chaînons, qui éventuellement contient un autre hétéroatome,

$R^{61}$ à $R^{68}$ indépendamment les uns des autres représentent l'hydrogène, un groupe alkyle en $C_1$ à $C_6$, alcoxy en $C_1$ à $C_4$, cyano, alcoxycarbonyle en $C_1$ à $C_4$ ou aryle en $C_6$ à $C_{10}$ et

$R^{61}$, $R^{62}$ et $R^{67}$ ; $R^{68}$ indépendamment les uns des autres forment en outre un pont $-(CH_2)_3-$, $-(CH_2)_4-$ ou -CH=CH-CH=CH-, et

v signifie un nombre entier entre 0 et 10,

ou des sels métalliques ou des sels complexes, de préférence des ions métalliques dont les degrés d'oxydation sont différents de1.

**12.** Dispositif d'affichage électrochrome selon les revendications 1 à 11, **caractérisé en ce qu'**il comprend une substance électrochrome de formule

$$Y\text{- }[-(\text{-B-Z-})_a\text{-}(\text{-B-Y-})_b\text{-}]_c\text{-B-Z} \qquad (I),$$

dans laquelle

Y et Z indépendamment l'un de l'autre représentent un radical $OX_2$ ou $RED_1$, où au moins un Y représente $OX_2$ et au moins un Z représente $RED_1$,

où

$OX_2$ est un radical d'un système redox réductible électrochimiquement réversiblement, et

$RED_1$ est un radical d'un système redox oxydable électrochimiquement réversiblement,

B représente un élément de pontage,

c représente un nombre entier de 0 à 5, et

a et b indépendamment l'un de l'autre représentent un nombre entier de 0 à 5.

**13.** Dispositif d'affichage électrochrome selon les revendications 1 à 12, **caractérisé en ce qu'**il contient une substance électrochrome de formules

$$OX_2\text{-B-}RED_1 \qquad (Ia),$$

$$OX_2\text{-B-}RED_1\text{-B-}OX_2 \qquad (Ib),$$

$$RED_1\text{-}B\text{-}OX_2\text{-}B\text{-}RED_1 \quad (Ic)$$

ou

$$OX_2\text{-}(B\text{-}RED_1\text{-}B\text{-}OX_2)_d\text{-}B\text{-}RED_1 \quad (Id)$$

dans lesquelles
$OX_2$, $RED_1$ et B ont les significations données ci-dessus et
d est un nombre entier d 1 à 5.

**14.** Dispositif d'affichage électrochrome selon les revendications 1 à 13, **caractérisé en ce que** $OX_2$ et $RED_1$ représentent en particulier des radicaux des systèmes redox décrits ci-dessus de formules (II) à (IX), (CI) à (CIV) et (X) à (XX), où la liaison à l'élément de pont B est effectuée via un des radicaux $R^2$ à $R^{19}$, $R^{22}$ à $R^{27}$, $R^{28}$ à $R^{58}$, $R^{61}$, $R^{62}$, $R^{67}$, $R^{68}$, $R^{122}$ ou dans le cas où un des radicaux $E^1$ ou $E^2$ représente $NR^1$ ou un des radicaux $E^3$ à $E^{11}$ représente $NR^{59}$ ou un des radicaux $E^{101}$ à $E^{102}$ représente $NR^{119}$, est effectuée via $R^1$, $R^{59}$ respectivement $R^{119}$ et lesdits radicaux représentent alors une liaison directe, et

B représente un pont de formule $-(CH_2)_n-$ ou
$-[Y^1{}_s(CH_2)_m-Y^2]_o-(CH_2)_p-Y^3{}_q-$ qui peut être substitué par un groupe alkyle en $C_1$ à $C_4$, alcoxy en $C_1$ à $C_4$, halogéno ou phényle,

$Y^1$ à $Y^3$ indépendamment les uns des autres représentent O, S, $NR^{60}$, COO, CONH, NHCONH, un groupe cyclopentandiyle, cyclohexandiyle, phénylène ou naphtylène,

$R^{60}$ signifie un groupe alkyle en $C_1$ à $C_6$, alcényle en $C_2$ à $C_6$, cycloalkyle en $C_4$ à $C_7$, aralkyle en $C_7$ à $C_{15}$ ou aryle en $C_6$ à $C_{10}$,

n signifie un nombre entier de 1 à 12,
m et p signifient indépendamment l'un de l'autre un nombre entier de à à 8,
o signifie un nombre entier de 0 à 6 et
q et s signifient indépendamment l'un de l'autre 0 ou 1.

**15.** Utilisation de substances électrochromes, telles que mentionnées dans les revendications 11 à 14, dans un dispositif d'affichage électrochrome, selon la revendication 1.